# EUROPEAN PATENT APPLICATION

(11) **EP 1 626 520 A1**
(43) Date of publication of application: **15.02.2006**
(21) Application number: 05255018.3
(22) Date of filing: 12.08.2005
(51) Int. Cl.: H04L 1/16

(54) **Method and apparatus for transmitting acknowledgement frames**

(30) Priority: 12.08.2004 KR 2004063599; 17.11.2004 KR 2004094099
(71) Applicant: Samsung Electronics Co., Ltd., Suwon-si, Gyeonggi-Do (KR)
(72) Inventor: Hong, Jin-woo, No. 104-702 1-danji Apt., Suwon-si Gyeonggi-do (KR); Shin, Se-young, Suwon-si Gyeonggi-do (KR); Bae, Dae-gyo, No. 708-101 7 Danji Apt,, Suwon-si Gyeonggi-do (KR); Sung, Hyun-ah, No. 104-201 Doosan Apt., Seoul (KR); Kwon, Chang-Yeul, No. 328-905 Hanyang Apt., Seongnam-si Gyeonggi-do (KR); Cho, Kyung-ik, Seoul (KR)
(74) Representative: Brandon, Paul Laurence

(57) **Abstract**

An efficient burst ACK method and apparatus in wireless communication environment are provided. An ACK frame transmission method whereby plural frames are received from a transmitting device and receipt of the frames is acknowledged with a single ACK frame includes receiving frames from the transmitting device and storing identification information of the received frames; generating a first field by recording a set of bit pairs to each of the received frames, with the use of the stored identification information; generating an ACK frame including the generated first field; and transmitting the generated ACK frame to the transmitting device, wherein a bit pair includes: a first bit to acknowledge whether any concerned frame is properly received; and a second bit to distinguish whether the first bit is to acknowledge receipt of the concerned frame from whether it is to acknowledge receipt of all the fragments following the concerned frame.

## Description

The present invention relates to acknowledge (ACK) frame transmission methods and apparatus.
As wireless networks are becoming increasingly popular and demand for transmission of voluminous multimedia data are growing, there is a need for more effective transmission in the wireless network environment. One of the properties of wireless networks is that several devices share and use given wireless resources. According to this inherent property, collisions in the course of transmission as contentions increase are liable to cause precious wireless resources to be wasted. To decrease contentions and transceive data in a stable manner, contention-based distributed coordination function (DCF) and noncoutention-based point coordination function (PCF) have been used in a wireless local area network (LAN), and time division such as channel time allocation has been used in a wireless personal area network (PAN).

Based on these methods, data may be stably transmitted and received in the wireless environment, but the other devices within the same radio wave range must be on standby while one device is conducting communications. For this reason, as the number of devices participating in communications increases, the rate of transmission is reduced considerably. In the wireless network environment it is important both to assure stable transmission and to enhance the rate of transmission.

There are several methods to increase the rate of transmission including, reduction of unnecessary overhead from data to be transmitted, and more efficient allocation of time between devices.
Generally, if a device to transmit data (hereinafter referred to as "transmitting device") transmits a data frame to a device to receive the data (hereinafter referred to as ''receiving device"), the receiving device transmits an ACK frame to the transmitting device when it has properly received the data frame.

There are two ACK frames: an ACK frame to acknowledge receipt of the ACK frame whenever a frame is received, and an ACK frame to acknowledge receipt of a plurality of ACK frames at a time after the plurality of ACK frames are received during a predetermined period of collection time. The former ACK frame can be defined as an immediate ACK frame and the latter ACK frame can be defined as a burst ACK frame. Between them, the present invention is directed to improvement in the structure of the burst ACK frame.

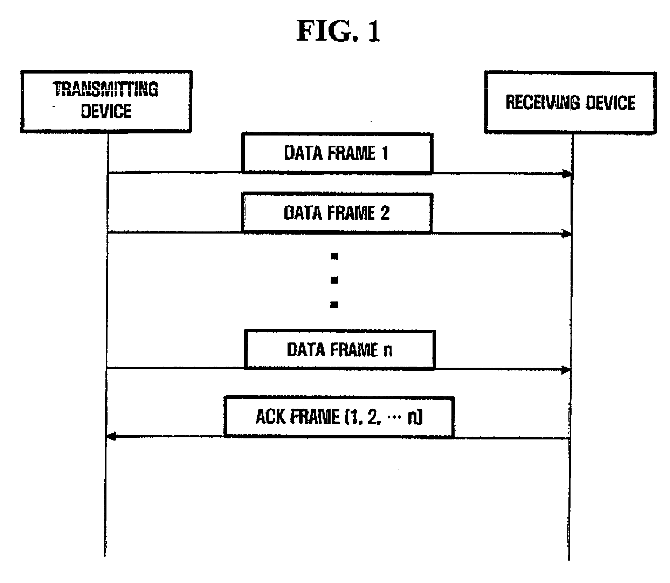

A general burst ACK frame is transmitted as illustrated in FIG. 1. A transmitting device transmits n data frames to a receiving device, and the receiving device sends n ACK frames at a time to the n data fames, whereby traffic may be reduced, in comparison of sending immediate ACK frames one by one.

The Wireless PAN Standard by the Institute of Electrical and Electronics Engineers (IEEE) 802.15.3 uses a delayed ACK frame whereas the wireless LAN Standard of IEEE 802.11e uses a block ACK frame.

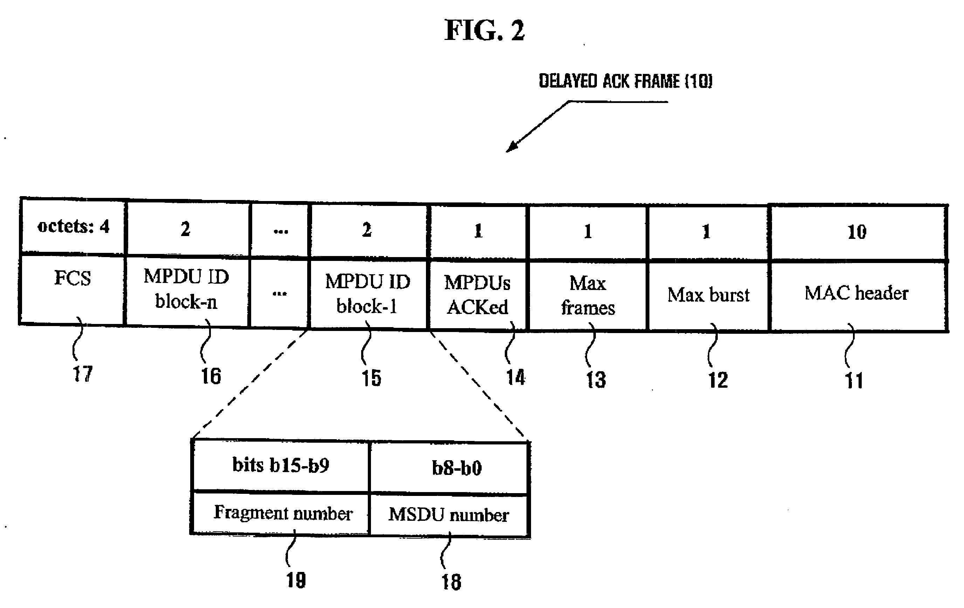

FIG. 2 illustrates a construction of a delayed ACK frame 10 according to the IEEE 802.15.3 Standard, under which a frame format is generally indicated from the right. That is, a media access control (MAC) header 11 is indicated on the right end of the frame. The delayed ACK frame 10 comprises the MAC header 11, a MAX burst field 12 to indicate the number of frames having the maximum MAC frame size among the frames waiting for the delayed ACK, a MAX frames field 13 to indicate the maximum number of the frames which can be processed at a time by the delayed ACK, n MAC protocol data unit (MPDU) ID block fields 15, 16, ..., and a frame checksum (PCS) field 17 to calculate an error checksum.

The MPDU ID block fields 15, 16, ... each comprises an MSDU number field 18 on which a MAC service data unit (MSDU) number (that is, an MSDU identification number) is recorded, the MSDU number being incremented by one whenever MAC layer of the transmitting device receives an MSDU from a higher layer (e.g., a logical link control (LLC) layer), and a fragment number field 19 on which the sequence of fragmentation when an MSDU fragmented is transmitted is recorded. The receiving device records the MSDU number and the fragment number to the data received by it and sends them to the transmitting device, whereby the transmitting device can know which data (MSDU itself, or partial fragments of the MSDU) is not properly transmitted. Thereafter, the transmitting device can retransmit only the data not properly transmitted to the receiving device.

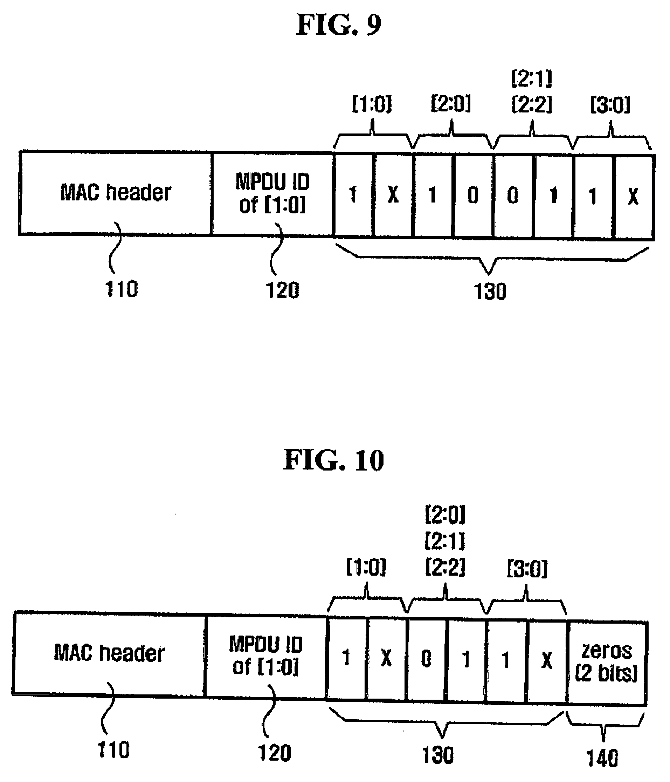

As illustrated in FIG. 2, 9 bits are allocated to the MSDU number field 18 and 7 bits are allocated to the fragment number field 19 under the IEEE 802.15.3 Standard, and thus, 2 bytes (2 octet) are allocated to each of the MPDU ID block fields 15, 16,

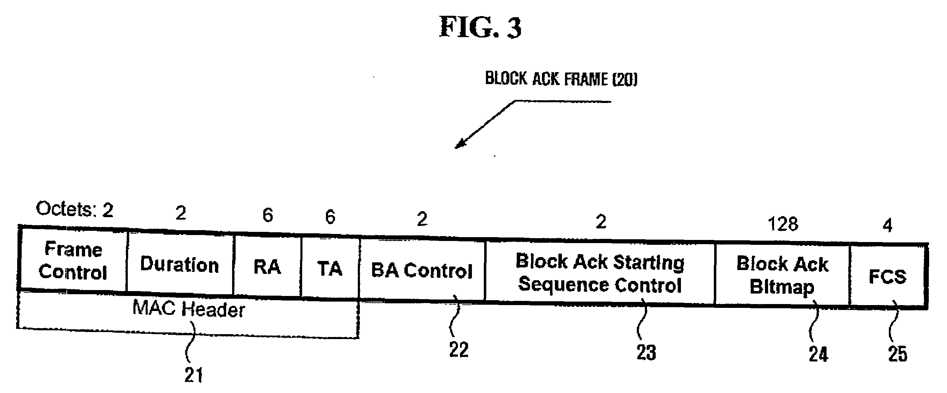

FIG. 3 illustrates a construction of a block ACK frame 20 according to the IEEE 802.11e Standard. The block ACK frame 20 comprises a MAC header 21, a block ACK (BA) control field 22 to control operations of the block ACK frame, a block ACK starting sequence control field 23 on which a fragment number and a sequence number of the first MPDU are recorded, a block ACK bitmap field 24 on which 'information to acknowledge receipt of' following MPDUs (information to indicate that specific data is properly received), hereinafter referred to as "receipt acknowledgement information," is sequentially recorded, and an FCS field 25 to calculate an error checksum.

The block ACK bitmap field 24 is allocated 128 bytes. If 2 bytes are allocated to each MSDU, the receipt acknowledgment information for 64 MSDUs at maximum can be recorded. Since an MSDU can be fragmented into 16 fragments at maximum under the IEEE 802.11e, the bit number by the maximum number of fragmentation (16 x 1 bit), that is, 2 bytes are allocated. Thus, 2 bytes are uniformly allocated even where there is no actual fragmentation or where fragmentation less than 16 is conducted. Therefore, it is not so efficient to indicate the receipt acknowledgement information with a single bit.

As illustrated in FIGS. 2 and 3, if 2 bytes are used in representing an MSDU, the size of a burst ACK frame may extraordinarily increase. If n data are transmitted and burst ACK frames to them are received, a payload of the burst ACK frame would be more or than 2n bytes. Thus, as the number of transmitting data increases, the size of the burst ACK frames increases accordingly, thereby causing unnecessary traffic to the wireless network environment.

It is an aim of preferred embodiments of the present invention to provide a burst ACK frame transmission method and apparatus which conduct functions of the conventional burst ACK frame as they are, but which has reduced size.

According to a first aspect of the present invention, there is provided an ACK frame transmission method whereby plural frames are received from a transmitting device and receipt of the frames is acknowledged with a single ACK frame, comprising (a) receiving frames from the transmitting device and storing identification information of the received frames, (b) generating a first field by recording a set of bit pairs to each of the received frames, with the use of the stored identification information, (c) generating an ACK frame including the generated first field, and (d) transmitting the generated ACK frame to the transmitting device, wherein a bit pair includes a first bit which acknowledges whether any concerned frame is properly received, and a second bit which distinguishes whether the first bit acknowledges receipt of the concerned frame from whether it is to acknowledge receipt of all the fragments following the concerned frame.

According to a second aspect of the present invention, there is provided an ACK frame transmission method whereby data frames are received from a transmitting device and receipt of the data frames is acknowledged with a single ACK frame, the method comprising: (a) receiving data frames from the transmitting device and storing first identification information of the data frames which are received; (b) generating a first field by recording a set of bit pairs to each of the data frames which are received by using the first identification information which is stored; (c) generating an ACK frame which includes the first field which is generated; and (d) transmitting the ACK frame which is generated to the transmitting device, wherein each bit pair includes: a first bit which acknowledges whether any concerned data frame is properly received; and a second bit which distinguishes whether the first bit acknowledges receipt of the concerned data frame from whether the first bit acknowledges receipt of all the fragments which follow the concerned data frame.

According to a third aspect of the present invention, there is provided an ACK frame transmission method whereby at least one data frames are received from a transmitting station and receipt of the frames is acknowledged with a single ACK frame, comprising (a) receiving the frames from the transmitting station and storing information which includes at least identification numbers of the received data frames, and the fragment numbers and the last fragment numbers of the data frames when the data frames are fragmented, (b) recording a set of bit pairs to each of the received data frames by use of the stored information, wherein the bit pairs each includes a first bit to acknowledge whether a concerned frame is properly transmitted, and a second bit to represent a range of data frame indicated by the first, (c) generating an ACK frame including a set of the recorded bit pairs, and (d) transmitting the generated ACK frame to the transmitting station.

According to a forth aspect of the present invention, there is provided an ACK frame transmission method whereby one or more data frames are received from a transmitting station and receipt of the data frames is acknowledged with a single ACK frame, the method comprising: (a) receiving the data frames from the transmitting station and storing information which includes at least identification numbers of the data frames which are received, wherein the information which is stored further includes fragment numbers and last fragment numbers of the data frames which are received are stored if the data frames are fragmented; (b) recording a set of bit pairs to each of the data frames which are received by using the information which is stored, wherein each bit pair includes a first bit which acknowledges whether a concerned data frame is properly transmitted, and a second bit which represents a range of the concerned data frame which is indicated by the first bit; (c) generating an ACK frame which includes the set of the bit pairs which are recorded; and (d) transmitting the ACK frame which is generated to the transmitting station.

According to a fifth aspect of the present invention, there is provided an ACK frame transmission method whereby one or more data frames are received from a transmitting device, and receipt of the frames is acknowledged with a single ACK frame, comprising (a) receiving the frames from the transmitting station and storing at least information which includes identification numbers of the received data frames, and, when the data frames are fragmented, fragment numbers and the last fragment numbers of the data frames, (b) continuously recording bits by use of the stored information to acknowledge whether each of the received data frames is properly transmitted, (c) generating an ACK frame including the recorded bit pair set, and (d) transmitting the generated ACK frame to the transmitting station.

According to a sixth aspect of the present invention, there is provided an ACK frame transmission method whereby one or more data frames are received from a transmitting device, and receipt of the data frames is acknowledged with a single ACK frame, the method comprising: (a) receiving the data frames from the transmitting station and storing at least information which includes identification numbers of the data frames which are received, wherein the information which is stored further includes fragment number and last fragment numbers of the data frames if the data frames are fragmented; (b) continuously recording bits with the information which is stored to acknowledge whether each of the data frames which are received is properly transmitted; (c) generating an ACK frame which includes a bit pair set which is recorded; and (d) transmitting the ACK frame which is generated to the transmitting station.

According to a seventh aspect of the present invention, there is provided an ACK frame transmission apparatus whereby a plurality of frames are received from a transmitting device and receipt of the frames is acknowledged with a single ACK frame, comprising a first means for receiving frames from the transmitting device, a second means for storing identification information of the received frames, a third means for generating a first field by recording a set of bit pairs to each of the received frames by use of the stored identification information, and to generate an ACK frame including the generated first Field, and a fourth means for transmitting the generated ACK frame to the transmitting device, wherein each bit pair includes a first bit which acknowledges whether any concerned frame is properly received, and a second bit which distinguishes whether the first bit is to acknowledge receipt of the concerned frame alone from whether it is to acknowledge receipt of all the fragments following the concerned frame.

According to an eighth aspect of the present invention, there is provided an ACK frame transmission apparatus whereby data frames are received from a transmitting device and receipt of the data frames is acknowledged with a single ACK frame, the apparatus comprising: a first means for receiving data frames from the transmitting device; a second means for storing first identification information of the data frames which are received; a third means for generating a first field by recording a set of bit pairs to each of the data frames which are received by using the identification information which is stored, and for generating an ACK frame which includes the first field which is generated; and a fourth means for transmitting the ACK frame which is generated to the transmitting device, wherein each bit pair includes: a first bit which acknowledges whether any concerned frame is properly received; and a second bit which distinguishes whether the first bit acknowledges receipt of the concerned data frame alone from whether the first bit acknowledges receipt of all fragments which follow the concerned data frame.

According to a ninth aspect of the present invention, there is provided an ACK frame transmission apparatus whereby one or more data frames are received from a transmitting station and receipt of the frames is acknowledged with a single ACK frame, comprising a means for receiving the frames from the transmitting station and storing information which includes at least identification numbers of the received data frames, and, when the data frames are fragmented, fragment numbers and the last fragment numbers of the data frames, a means for recording a set of bit pairs to each of the received data frames by use of the stored information, wherein each bit pair includes a first bit to acknowledge whether a concerned frame is properly transmitted, and a second bit to represent a range of data frame indicated by the first bit, a means for generating an ACK frame including a set of the recorded bit pairs, and a means for transmitting the generated ACK frame to the transmitting station.

According to a tenth aspect of the present invention, there is provided an ACK frame transmission apparatus whereby data frames are received from a transmitting station and receipt of the data frames is acknowledged with a single ACK frame, the apparatus comprising: a means for receiving the data frames from the transmitting station and storing information which includes at least identification numbers of the data frames which are received, wherein the information which is stored further includes fragment numbers and last fragment numbers of the data frames if the data frames are fragmented; a means for recording a set of bit pairs to each of the data frames which are received by using the information which is stored, wherein each bit pair includes a first bit which acknowledges whether a concerned data frame is properly transmitted, and a second bit which represents a data frame range which is indicated by the first bit; a means for generating an ACK frame which includes a set of the bit pairs which are recorded; and a means for transmitting the ACK frame which is generated to the transmitting station.

According to an eleventh aspect of the present invention, there is provided an ACK frame transmission apparatus whereby one or more data frames are received from a transmitting station and receipt of the frames is acknowledged with a single ACK frame, comprising a means for receiving the frames from the transmitting station and storing information which includes at least identification numbers of the received data frames, and, when the data frames are fragmented, fragment numbers and the last fragment numbers of the data frames, a means for continuously recording bits to acknowledge regular receipt of each of the received frames by use of the stored information, a means for generating an ACK frame including the recorded bits, and a means for transmitting the generated ACK frame to the transmitting station.

According to a twelfth aspect of the present invention, there is provided an ACK frame transmission apparatus whereby one or more data frames are received from a transmitting station and receipt of the data frames is acknowledged with a single ACK frame, the apparatus comprising: a means for receiving the data frames from the transmitting station and storing information which includes at least identification numbers of the data frames which are received, wherein the information which is stored further includes fragment numbers and last fragment numbers of the data frames if the data frames are fragmented; a means for continuously recording bits to acknowledge proper receipt of each of the data frames which are received by using the information which is stored; a means for generating an ACK frame which includes the bits which are recorded; and a means for transmitting the ACK frame which is generated to the transmitting station.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
FIG. 1 illustrates a general mode of burst ACK frame transmission;
FIG. 2 illustrates a construction of a delayed ACK frame according to the IEEE 802.15.3 Standard;
FIG. 3 illustrates a construction of a block ACK frame according to the IEEE 802.11e Standard;
FIG. 4 illustrates a construction of a burst ACK frame for use with an exemplary embodiment of the present invention;
FIG. 5 illustrates a structure of a conventional MAC header according to the IEEE 802.11 Standard and a MAC header according to the IEEE 802.15.3;
FIGS. 6 to 10 illustrate how a burst ACK frame is determined for use with several exemplary embodiments;
FIG. 11 illustrates a construction of a wireless device according to an exemplary embodiment of the present invention;
FIG. 12 is a block diagram illustrating a detailed construction of a burst ACK generating module;
FIG. 13 illustrates a construction of a conventional MAC header according to the IEEE 802.15.3 Standard;
FIG. 14 is a flow chart illustrating generation of a burst ACK frame for use with an exemplary embodiment of the present invention;
FIG. 15 is a flow chart illustrating operation S50 of FIG. 14 in more detail;
FIG. 16 illustrates a construction of a conventional burst ACK requesting frame 310;
FIG. 17 illustrates a construction of a conventional block ACK frame 320;
FIG. 18 illustrates an overview of a block ACK mechanism;
FIG. 19 illustrates a construction of a data frame 350 for use with an exemplary embodiment of the present invention;
FIG. 20 illustrates a construction of a burst ACK frame 3100 for use with an exemplary embodiment of the present invention;
FIGS. 21 to 26 illustrate how a burst ACK frame 3100 is constructed for use with several exemplary embodiments;
FIG. 27 illustrates a construction of a block ACK bitmap field 3170 when an 1 bit mode is used;
FIG. 28 illustrates an example of representing a case of FIG. 25 with the 1 bit mode;
FIG. 29 is a block diagram illustrating a construction of a wireless station 3200 according to an exemplary embodiment of the present invention; and
FIG. 30 is a flow chart illustrating a method according to an exemplary embodiment of the present invention.

Exemplary embodiments proposed by the present invention will be directed to improvements using a delayed ACK frame according to the IEEE 802.15.3 Standard (a first example), and improvements using a block ACK frame according to the IEEE 802.11 Standard (a second example).

### First Example

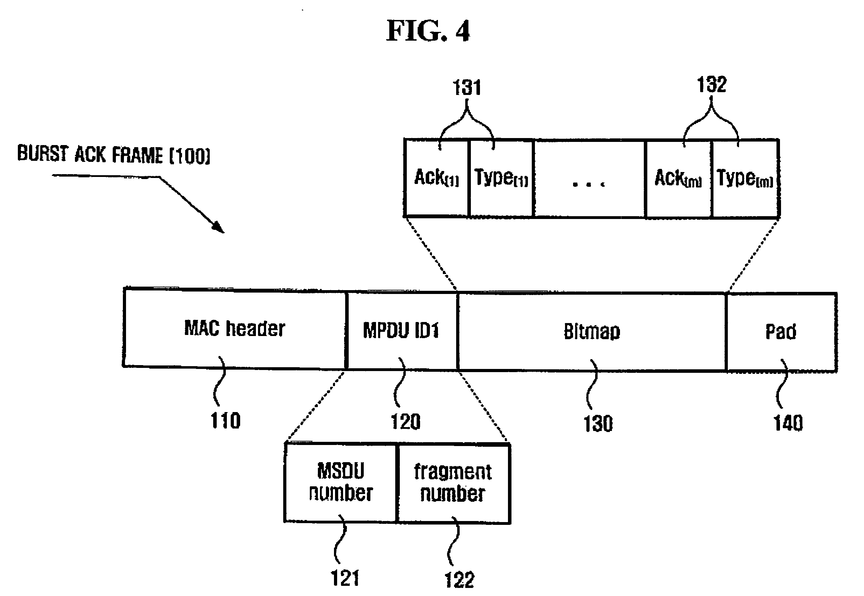

FIG. 4 illustrates a construction of a burst ACK frame 100 for use with an exemplary embodiment of the present invention. The burst ACK frame 100 comprises a MAC header 110 and a payload section consisting of 120, 130 and 140. The MAC header 110 may have the same construction as a conventional MAC header of the IEEE 802.15.3 Standard, as illustrated in PIG. 5.

The payload sections may consist of an MPDU ID field 120, a bitmap field 130 and a pad field 140. The identification information about a first frame, among the frames targeted for an ACK response (hereinafter referred to as "target frames"), is recorded on the MPDU ID field 120, which is composed of an MSDU number field 121 and a fragment number field 122. Since the burst ACK frame 100 according to the present invention acknowledges receipt of all the transmitted frames covering non-received frames as well as received frames, the target frames refer to all the frames transmitted within a fixed period of time (limited to transmitted frames which request ACKs).

An MSDU number of the first frame, among the target frames, is recorded on the MSDU number field 121, and a fragment number of the first frame is recorded on the fragment number field 122. The MSDU number and the fragment number can be determined by reviewing the MAC header of the received target frame.

Pairs of an ACK bit and a Type bit for a target frame (hereinafter referred to as "bit pair") are sequentially recorded on the bitmap field 130. The minimum number (m) of the bit pair is equal to the total number of MSDUs, and the maximum number thereof is equal to the total number of fragments.

The target frame consists of a single MSDU if the target frame is not fragmented, or may comprise a part of fragments in the MSDU if the target frame is fragmented.

A bit to acknowledge regular receipt of a target frame is recorded on the ACK bit of the bitmap field 130. If properly received, 1 is recorded; if not, 0 is recorded. On the Type bit, bit information is recorded to distinguish whether the ACK bit is to acknowledge receipt of the target frame (MSDU or fragment) from whether the ACK bit is to acknowledge receipt of all fragments following the current fragment within the MSDU. The Type bit may be recorded as '0' in the former case and '1' in the latter case.

The pad field 140 is filled with variable bits, all of which are dummy bits (e.g., 0). Since the bitmap field 130 is in the unit of bit, the pad field 140 is used to make the bitmap field 130 in the unit of byte or octet by filling it with a predetermined number of dummy bits. Thus, if the sizes of the bitmap field 130 and the pad field 140 are added, they would always be in the units of a byte. However, the pad field 140 may be omitted since it is not an indispensable element to define a protocol for use with embodiments of the present invention.

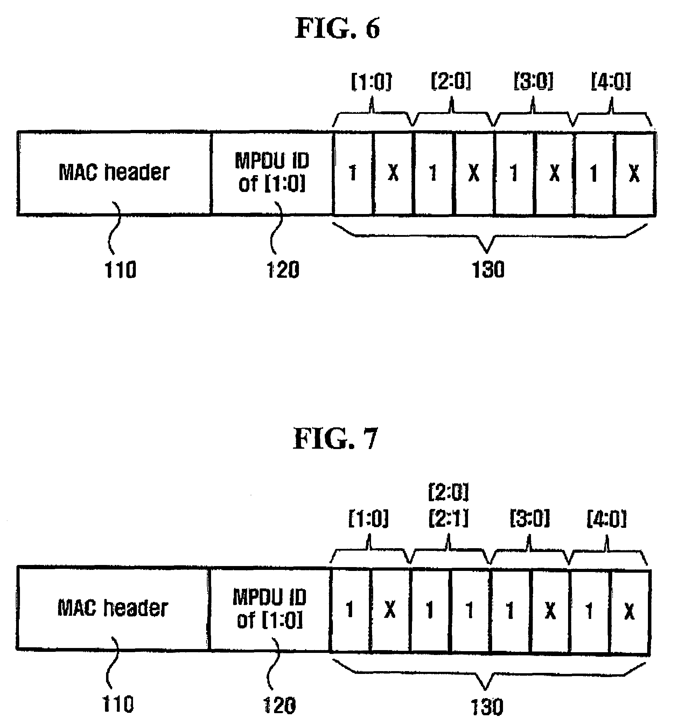

FIGS. 6 to 10 explain how the burst ACT frame 100 is determined according to several exemplary embodiments. Here, [A:B] is an indication to identify a frame, wherein A refers to one of the numbers sequentially assigned to MSDU numbers which are transmitted by the transmitting device (hereinafter referred to as "MSDU sequence") and B refers to a fragment number which starts from 0. For example, when the transmitting device sends frames whose MSDU numbers are 1234 to 1237, the MSDU sequences of 1 to 4 are sequentially assigned thereto. The MSDU sequences are assigned based on the MSDU numbers which are sent by the transmitting device, but not on the MSDU numbers received and stored by the receiving device. Thus, even if the transmitting device transmits the frames whose MSDU numbers are 1234 to 1237 but the receiving device receives only the frames whose MSDU numbers are 1235 and 1237, the MSDU sequences are sequentially assigned for all the numbers in the sequence 1234 to 1237.

FIG. 6 depicts a structure of a burst ACK frame 100 where [1:0], [2:0], [3:0] and [4:0] are all properly received and are not fragmented. The MSDU number (=1) and the fragment number (=0) of the frame [1:0] are recorded on the MPDU ID field 120. Bit pairs, which each consist of an ACK bit and a Type bit for a target frame, are sequentially recorded on the bitmap field 130. However, since the bitmap field 130 is in the unit of a byte, no separate pad field is needed. Here, it is clarified that "sequence" is based on the MSDU numbers and the fragment numbers, not on the sequences of received frames. The sequence is based on the MSDU numbers and the fragment numbers because a frame which is first transmitted may be received later. Since [1:0], [2:0], [3:0] and [4:0] are all properly received, the first bits of the bit pairs are filled with 1. It does not matter whether the second bit of the bit pair (indicated with X) is filled with any of values 0 and 1.

Since the concerned MSDU is completed in that frame, it may be indicated with '1'. This is also an indication to acknowledge receipt of a frame, and thus, it may be indicated with '0'. Further, since both of the transmitting device and the receiving device know which MSDU is fragmented by sharing information regarding the MDSU, there is no likelihood that any confusion is caused. However, it may be desirable to fill the second bit with '1', in order to clarify that the frame is complete in an MSDU. Hereinafter, the symbol "X" will be interpreted with the same meaning as in the present exemplary embodiment.

FIG. 7 depicts a structure of a burst ACK frame 100 where [1:0], [2:0], [2:1], [3:0] and [4:0] are all properly received and the second MSDU is fragmented. As in FIG. 6, the MSDU number (=1) and the fragment number (=0) of the frame [1:0] are recorded on the MPDU ID field 120. Bit pairs each consisting of an ACK bit and a Type bit for a target frame are sequentially recorded on the bitmap field 130.

Since [1:0], [2:0], [2:1], [3:0] and [4:0] are all properly received, the first bit of the bit pair is filled with '1'. Since [1:0], [3:0] and [4:0] are completed frames, the second bit is filled with 'X'. However, since [2:1] having the same MSDU number but a different fragment number after [2:0] is present, the second bit of the bit pair for [2:0] is indicated with '1', thereby indicating that all the fragments after [2:0] are properly received.

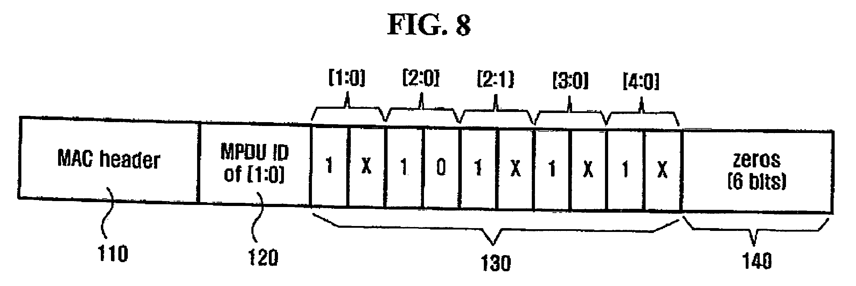

Fragmented MSDUs may be indicated together, but a method of indicating the burst ACK frame 100 fragment by fragment, under the same condition, where the MSDU is fragmented as in FIG. 8, may also be considered. FIG. 9 depicts a structure of the burst ACK frame 100 where the transmitting device transmits [1:0], [2:0], [2:1], [2:2] and [3:0] but the receiving device properly receives only [1:0], [2:0] and [3:0]. It can be known that the second MSDU is divided into three fragments. The MSDU number (=1) and the fragment number (=0) of the frame [1:0] are recorded on the MPDU ID field 120. Bit pairs each consisting of an ACK bit and a Type bit for all target concerned frames which are sent by the transmitting device are sequentially recorded on the bitmap field 130.

Since both [1:0] and [3:0] are properly received, the first bits of the bit pairs are filled with '1', and the second bits are filled with 'X' since they are completed frames. However, since [2:0] is properly received but the fragments which follow [2:0] are present, '10' is recorded on the corresponding position only to acknowledge receipt of the current frame [2:0]. However, since [2:1] and [2:2] are not properly received, the first bit of [2:1] is indicated with '0', and the second bit is indicated with '1', to represent these two frames. This implies that the first bits are ACK bits to the frames which follow the current frame, that is, [2:1] and [2:2].

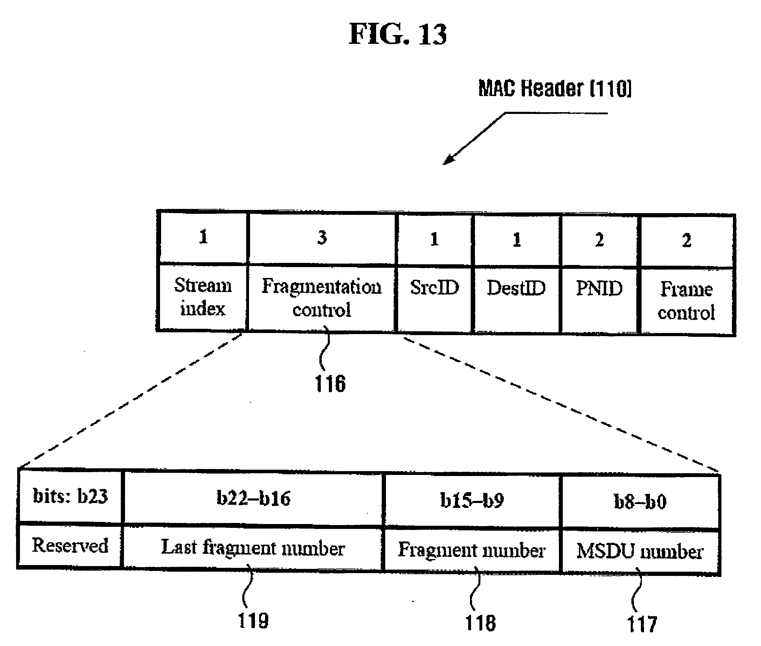

When the receiving device only receives [2:0], whether [2:1] and [2:2] are present can be determined by considering the MAC header of [2:0], which will be later described in detail with reference to FIG. 13.

FIG. 10 depicts a structure of the burst ACK frame 100 where the transmitting device transmits [1:0], [2:0], [2:1], [2:2] and [3:0] but the receiving device properly receives only [1:0] and [3:0]. Since the receiving device receives no data regarding the second MSDU, the receiving device does not know whether it consists of three fragments. However, since the receiving device receives [1:0] and [3:0], it knows that the frame for the second MSDU is not transmitted.

The MSDU number (=1) and the fragment number (=0) of the frame [1:0] are recorded on the MPDU ID field 120. Bit pairs consisting of an ACK bit and a Type bit for all the target frames which are sent by the transmitting device are sequentially recorded on the bitmap field 130.

Since both [1:0] and [3:0] are properly received, the first bits of the bit pairs are filled with '1', and the second bits are filled with 'X' since they are completed frames. However, considering that frames whose MSDUs are 1 and 3 are received, it can be determined that the frame whose MSDU is 2 is also transmitted but not received by an error. Although no frame to the second MSDU is received, the first bit is filled with '0' and the second bit is filed with '1' on the corresponding position of [2:0], which indicates that all the fragments after [2:0] are not received.

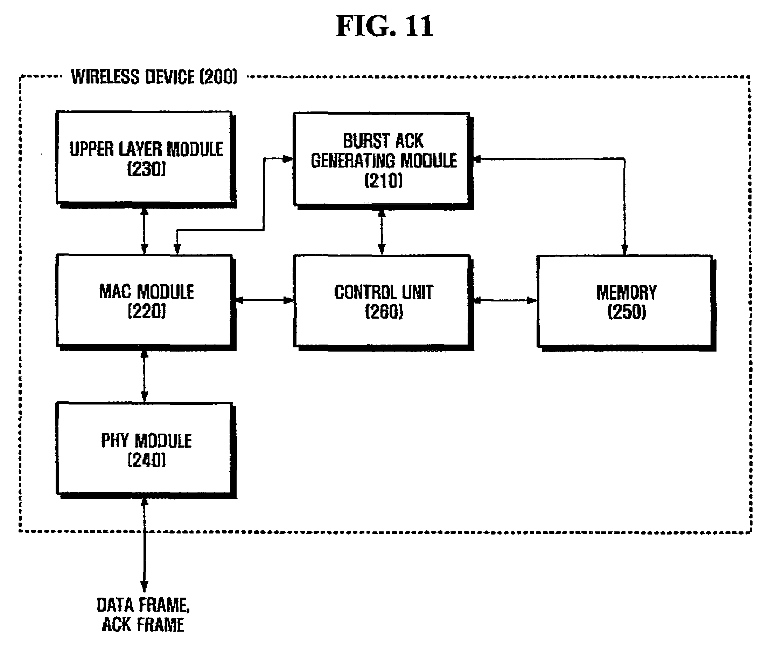

FIG. 11 is a block diagram depicting a construction of a wireless device 200, according to an exemplary embodiment of the present invention, which transmits the burst ACK frame 100 described above. The wireless device 200 comprises a burst ACK generating module 210, a MAC module 220, a upper layer module 230, a PHY module 240, a memory 250 and a control unit 260.

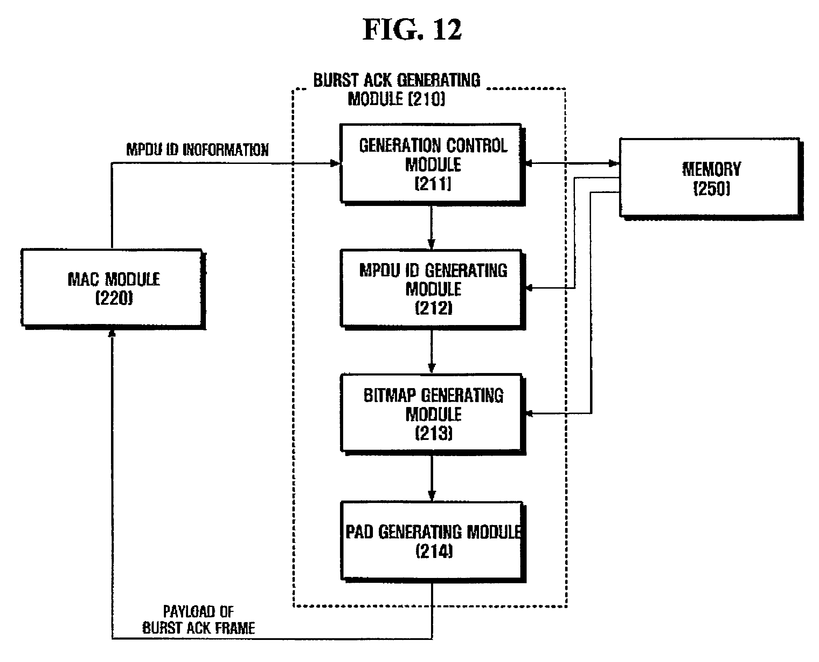

The burst ACK generating module 210 reads out MPDU ID information from header information of a received data frame as identification information of a concerned frame, and generates a payload of the burst ACK frame 100as described herein by use of this information. The burst ACK generating module 210 has a detailed structure as depicted in FIG. 12. More specifically, the burst ACK generating module 210 comprises a generation control module 211, an MPDU ID generating module 212, a bitmap generating module 213 and a pad generating module 214.

The generation control module 211 checks a condition to generate a burst ACK frame 100 (hereinafter referred to as "ACK generating condition") to a predetermined number of frames which are received from a specific transmitting device, and receives MPDU ID information included in MAC headers of the frames, which are received from the specific transmitting device, from the MAC module 220 and stores the MPDU ID information in the memory 250, while the condition is not satisfied. When the condition is completed, the generation control module 211 allows the MPDU ID generating module 212, the bitmap generating module 213 and the pad generating module to generate the payload of the burst ACK frame 100 by use of the stored MPDU ID information.

MPDU ID information includes 'MSDU numbers' to indicate proper serial numbers to MSDUs of the received frames and 'fragment numbers' to indicate the sequences of fragmentation. The MPDU ID information is also indicated in the MAC header 110 according to the IEEE 802.15.3 Standard as in FIG. 1.

In the MAC header 110 of FIG. 13, a fragmentation control field 112 is sectioned into an MSDU number field 117, a fragment number field 118 and a last fragment number field 119. By reading out the fragmentation control field 112, the MSDU ID information can be determined. However, differently from FIG. 12, since each number of the last fragments is recorded on the last fragment number fields 119 in all the frames which are fragmented, the presence of [2:1] and [2:2] can be determined even if only [2:0] is received in a case of FIG. 9.

Referring to FIG. 12 again, the ACK generation condition which is checked by the generation control module 211 is based on whether some bits requesting the burst ACK frame in the MAC header (hereinafter referred to as "request bit") are ON when the transmitting device transmits a target frame to the receiving device. That is, the request bit of a concerned frame is read out whenever the target frame is received: when the value is a bit which indicates OFF (=0), it is determined that the ACK generating condition is not met. Rather, the ACK generating condition is determined to be met when the value is a bit which indicates ON (=1).

When the transmitting device sends [1:0], [2:0] and [3:0] and a request bit is set "ON" on [3:0], and the receiving device receives only [1:0] and [2:0], the receiving device will not generate the burst ACK frame because the ACK generating condition is not accomplished. Thereafter, if the burst ACK frame is not received within a predetermined period of time, the transmitting device determines that there is an error in transmission and then sets the request bit to "ON" and transmits [3:0] again.

It has been described above that the ACK generating condition is determined by the transmitting device. Further, it may be established that the ACK generating condition may also be satisfied when target frames exceeding the predetermined number are received.

The MPDU ID generating module 212 records the MPDU ID field 120, that is, the MSDU number field 121 and the fragment number 122 of the first frame, among the target frames, by use of the MSDU ID information stored in the memory 250.

The bitmap generating module 213 additionally records bit pairs to a target frame sequentially on the MPDU ID field 120. There is recorded bit information to distinguish the following cases. On the first bit (ACK bit), a bit is recorded to acknowledge whether the frame indicated by the current bit pair is properly received ('1' in case of regular reception or '0' in the other cases), and on the second bit (Type bit) a bit is recorded to acknowledge whether the first bit is to acknowledge receipt of the concerned frame (recorded as 0), and to acknowledge whether all the fragments following the current fragment within a single MSDU are received.

When the size of bitmap is not in the unit of byte, the pad generating module 214 makes the bitmap in the unit of byte by filling the remaining bits with 0.

Referring to FIG. 11 again, the MAC module 220 controls operations on the MAC layer. The MAC module 220 receives an MSDU which is transmitted from the upper layer module 230, attaches the MAC header as in FIG. 13 to the MSDU and then transmits the MDSU to the PHY module 240. The MAC module 220 also receives the payload of the burst ACK frame which is transmitted from the burst ACK generating module 240, and attach a MAC header thereto and transmits the MDSU to the PHY module 240.

When the MAC module receives a frame which is transmitted from another device, from the PHY module 240, the MAC module 220 reads out the MAC header and removes it, and then transmits the result to the upper layer module 230. The MPDU ID information which is read out from the MAC header is transmitted to the burst ACK generating module 210.

The upper layer 230 generates an MSDU and transmits the MDSU to the MAC module 220, and receives data whose MAC header is removed from the MAC module. The upper layer module 230 controls network layers which are higher than a logical link control (LLC) layer.

The PHY module 240 controls operations on the physical layer. That is, PHY module 240 receives an MPDU (MAC protocol data unit) from the MAC module 220 and, on this basis, generates a PPDU (packet protocol data unit), generates wireless signals including the PPDU and transmits it. After the PHY module 240 receives signals transmitted through a wireless medium and processes them, PHY module 240 transmits the signals to the MAC module 220. The PHY module 240 may be subdivided into a base band processor and a radio frequency (RF) module.

The memory 250 stores MPDU ID information related to the received frame therein and supplies the information once the memory 250 receives a request from the burst ACK generating module 210.

The control unit 260 controls operations of other modules within the wireless device 100, which may be embodied as a central processing unit (CPu and a microcomputer, etc.

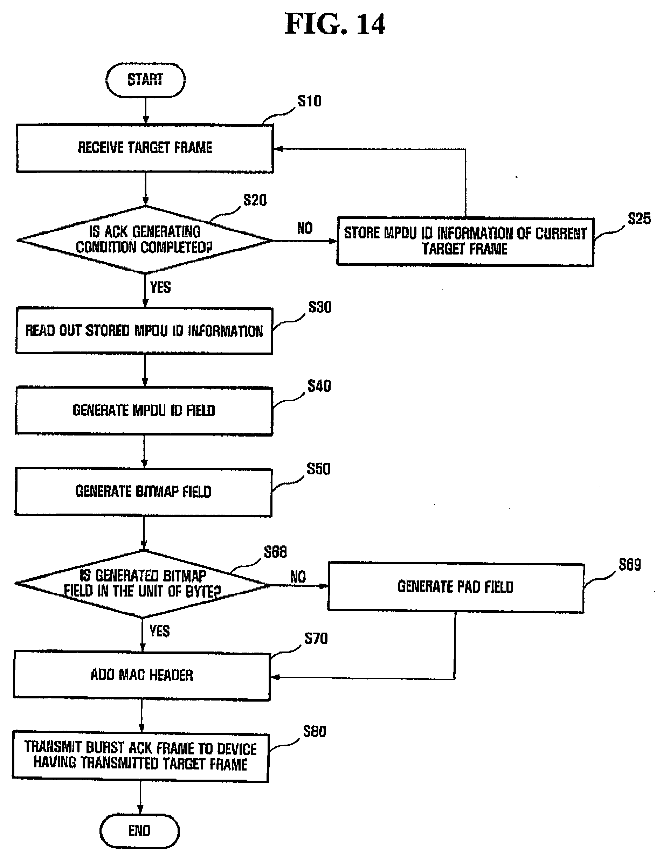

FIG. 14 is a flow chart illustrating a method of generation of a burst ACK frame 100 for use with an exemplary embodiment of the present invention.

The generation control module 211 receives a target frame through the PHY module 240 in operation S10 until the ACK generating condition is completed ("NO" of S20) and repeats an operation S25 to store MPDU ID information of the received target frame. MPDU ID information includes an MSDU number and a fragment number of the target frame.

The generation control module 21 determines whether the ACK generating condition is completed. If completed ("YES" of S20), the payload of the burst ACK frame 100 is generated. Generation of the payload is conducted in operations of S30 to S69.

The MPDU ID generating module 212 generates an MPDU ID field 120 by recording a MSDU number field 121 and a fragment number field 122 of the first frame, among the target frames stored in the memory 250.

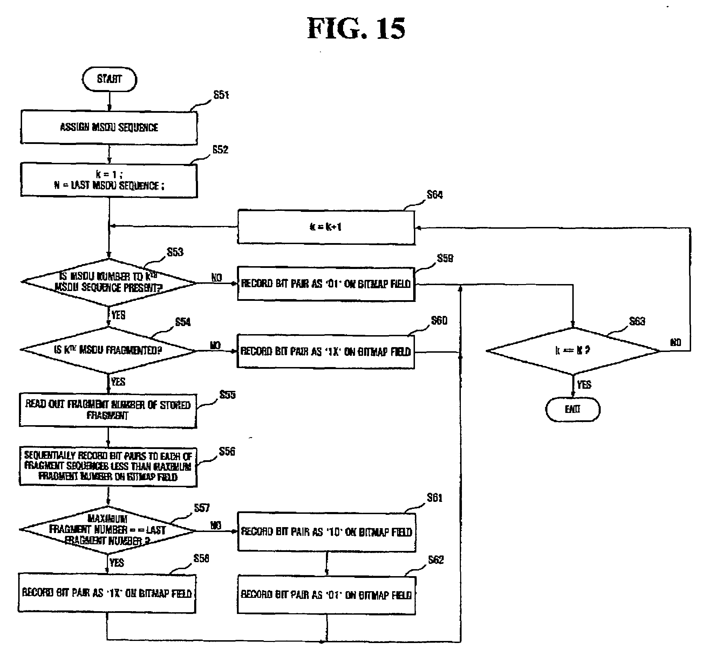

The bitmap generating module 213 generates a bitmap field 130 by additionally recording the bit pairs to the target frame sequentially on the MPDU ID field 120 S50. Operation S50 will be later described in more detail by reference to FIG. 15.

There is no need to generate the pad field 140 if the size of the generated bitmap field is in the unit of a byte ("YES" of S68). However, the pad fields 140 having serial zero (0) values of the predetermined bits are continuously attached to the bitmap field 130 in the other cases. The number of bits having the serial zeros refers to the number of bits which make the bitmap field in the unit of byte by adding the bitmap field 130 and the pad field 140.

The MAC module 120 attaches a MAC header to the payload of the burst ACK frame 100 which is generated in S50 or S69 and generates a burst ACK frame 100 S70. The PHY module 140 transmits the generated burst ACK frame 100 to the device which transmitted the target frame through a wireless medium S80.

FIG. 15 is a flow chart illustrating an operation S50 of FIG. 14 in more detail.

'MSDU sequences' are assigned to MSDU numbers stored in the memory 250 in operation S51. For example, if the stored MSDU numbers are 1234 to 1237, the MSDU sequences of the MSDU numbers will be 1 to 4 sequentially. Even where the stored MSDU numbers are not continuous, e.g., 1234, 1236 and 1237, the MSDU sequence (k=3) is assigned 1235, which was not received, as if it is properly received.

Next, k is set 1 as an initial value and the last MSDU sequence is set N S52.

Since there may be an error in reception, all the MSDU numbers which are stored in the memory may not exist which correspond to all the MSDU sequence k. Accordingly, it is determined whether the corresponding MSDU number to the kth MSDU sequence is present S53. If not present ("NO" of S53), the bit pair is recorded as '01' on the bitmap field 130 in operation S59.

If present, it is determined whether the kth MSDU is fragmented in operation S54. If not fragmented ("NO" of S54), the bit pair is recorded as '1X' on the bitmap field 130. Here, it is implied that 'X' may be recorded with any of the values '1' and '0'.

If fragmented ("YES" of S54), the fragment numbers of all the stored fragments corresponding to the kth MSDU are read out in operation S55. Among the stored fragment numbers, the fragment sequences less than the maximum fragment number are sequentially recorded as bit pairs on the bitmap field 130 in operation S56. Similar to the MSDU sequence, the fragment sequence is also assigned sequentially based on the frames which are transmitted by the transmitting device.

For example, considering that [2:0], [2:1], [2:2] and [2:3] are transmitted but [2:1] and [2:3] are only received, the fragment numbers of the stored fragments are 1 and 3, and thus, the maximum fragment number is 3. The fragment sequences less than 3 are 0, 1 and 2, and thus, the bit pairs, '00,' '10' and '00,' are sequentially recorded on the bitmap field 130.

When the maximum fragment number is equal to the last fragment number ("YES" of S57), the bit pair is recorded as 'X' on the bitmap field 130. As described above, the maximum fragment number refers to the maximum value among the fragment numbers which are stored in the memory 250, and the last fragment number refers to the number of the last fragment of the target frame which is transmitted by the transmitting device. It can be determined by referencing the last fragment number field 119 in FIG. 13 whether the maximum fragment number refers to the last fragment number.

If "NO" is answered in operation S57, the bit pair to a fragment having the maximum fragment number is recorded as '10' in operation S61, and the bit pairs to all the fragment numbers following it are as each recorded as '01' in operation S62.

Ifk is equal to n after conducting operations S58, S59, S60 or S66, recording the bitmap field 130 is completed and then terminated. If not, it returns to operation S53 again after incrementing k by one (1).

### Second Example

To satisfy the growing demand in the industry to transmit voluminous multimedia data, the IEEE 802.11n Task Group is developing a new form of wireless LAN Standardization which has bandwidth larger than 100Mbps. IEEE 802.11n is one of wireless LAN technologies which employs a multi input multi output (MIMO) based on technologies for quality of service (QoS) improvement over IEEE 802.11e. IEEE 802.11n can coexist with conventional wireless LANs, and is available for communications as needed. A variety of functions are added; e.g., block transmission which refers to transmission of data frames which are continuously transmitted without receiving ACKs.

An inherent property of wireless LANs is channel unreliability, and thus, an ACK frame is generally used to ascertain the result of data transmission. However, in IEEE 802.11n, a burst ACK request frame and a block ACK frame as a result of block transmission are used. The block ACK frame may include results of transmission acknowledgement to 64 MSDUs at maximum and 1024 fragmented frames at maximum. However, the block ACK frame has a fixed size of 152 bytes, regardless of the number of block transmissions transmitted, and for this reason, the efficiency is not optimal.

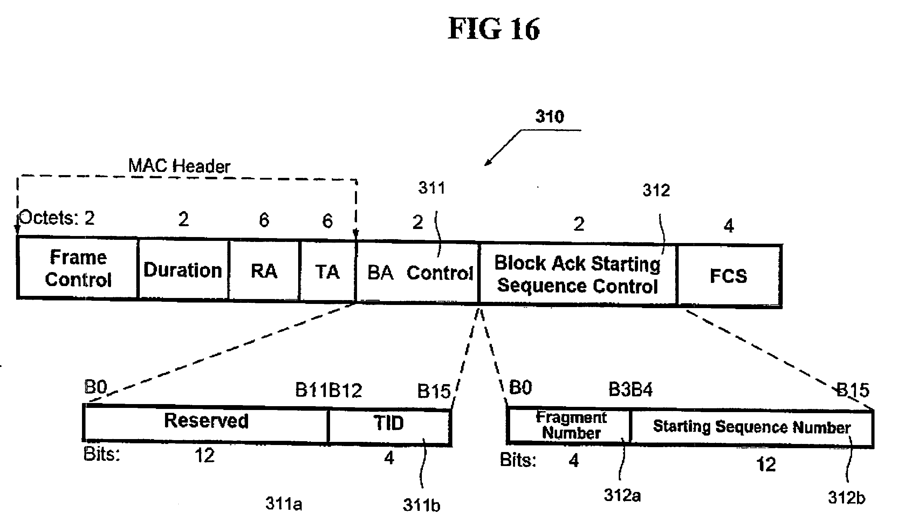

In the block ACK mechanism, a burst ACK request frame and a block ACK frame are used. The conventional burst ACK request frame 310 has the construction as illustrated in FIG. 16. The frame 310 has a type of 'control' and a subtype of '1000,' comprising a BA control field 311 and a block ACK starting sequence field 312. The BA control field 311 is subdivided into a reserved field 311a and a TID field 311b, and the block ACK starting sequence field 312 is subdivided into a fragment number field 312a and a starting sequence number field 312b.

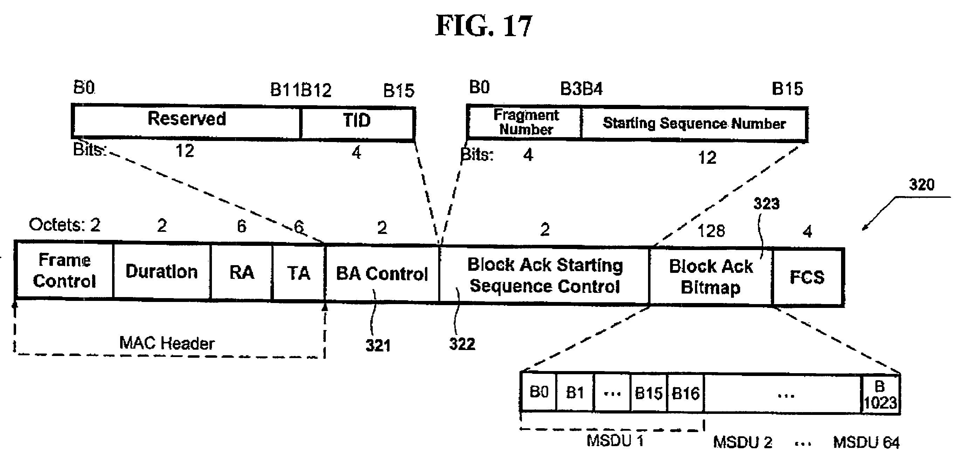

FIG. 17 illustrates a construction of a conventional block ACK frame 32, which provides detail of the ACK frame depicted in FIG. 3. The frame 320 has a type of 'control' and a subtype of '1001.' The block ACK frame 320 comprises a BA control field 321 requested from the burst ACK request field 310, a block ACK starting sequence field 322 and a block ACK bitmap field 323 including a result of transmission acknowledgement of the data previously transmitted in the block.

After successfully receiving the burst ACK request which was transmitted by an originator, a recipient records the acknowledgement result of the data transmission by previous block transmission on the block ACK bitmap field 323 in the block ACK frame 320 and transmits the block ACK frame 320 to the originator. Generally, the originator refers to a station that transmits data, and the recipient refers to a station that receives the data.

The block ACK bitmap field 323 has the fixed length of 128 bytes and can represent 64 MSDUs. 2 bytes are allocated to each MSDU, which can represent 16 fragments. The transmission acknowledgement result of 64 MSDUs and 1024 fragments at maximum can be represented with a bitmap of 1024 bits (B0 to B 1023).

Using the conventional block ACK frame 320, the transmission acknowledgement is conducted by use of a bitmap having the fixed length, thereby making it simple to record and read the frames. However, in a wireless network environment where wireless channel resources are not sufficient, this may adversely affect to block efficient use of the channels.

Actually, an MSDU may be constructed with a maximum of 16 fragments. In most cases, data is not fragmented but is transmitted in a single MSDU. However, the conventional block ACK frame 320 is constructed in order that 64 MSDUs and 1024 fragments are recorded at maximum, and thus, a majority of sections may be wasted in the frame 320. Since transmission of small-sized blocks is generated but the transmission includes the fixed size of bitmap, the time occupying a channel would be extended, thereby resulting in inefficiently using the channels.

If the recipient receives 64 MSDUs which are not fragmented and sends the conventional block ACK frames 320 thereto, this may result in waste of about 94%, only considering the efficiency of a bitmap included in the frame 320, because the frame 320 contains as many as (024-64) useless information bits. Thus, developing a construction of a block ACK frame which is smaller in size, and which also conducts the conventional functions as they are, can significantly reduce traffic in wireless communications.

According to the block ACK mechanism, a block of data (a set of data frames which is continuously transmitted without receiving an ACK) having time intervals as much as a short interframe space (SIFS) can be transmitted. This mechanism improves efficiency in using channels by replacing a plurality of ACKs with a single frame (a block ACK frame). This block ACK mechanism has two types: 'immediate' and 'delayed.' An immediate-type block ACK is appropriate for an environment which requires high bandwidth and low traffic latency. Further, a delayed-type block ACK is appropriate for any environment which can endure some degree of latency.

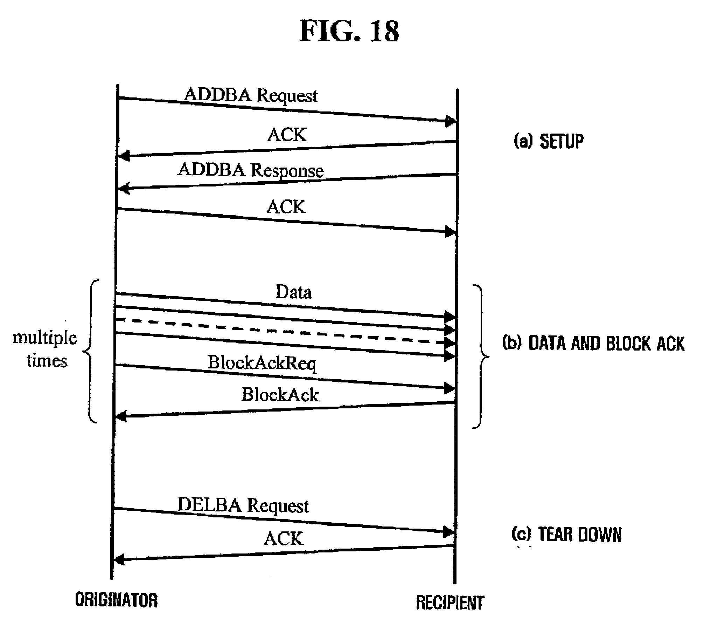

The block ACK mechanism starts as an ADDBA request frame and is transmitted as in FIG. 18. Thereafter, a data block is transmitted to the recipient from the originator. The time interval between QoS data is maintained. Subsequently, as the originator requests a block ACK (BlockAckReq) from the recipient, the recipient transmits a block ACK frame to the originator.

Last, the operations may be finished as the originator sends a DELBA request to the recipient. FIG. 18 shows set-up and tear-down by way of example. However, set-up and tear-down are not necessarily requested in implementing the present invention.

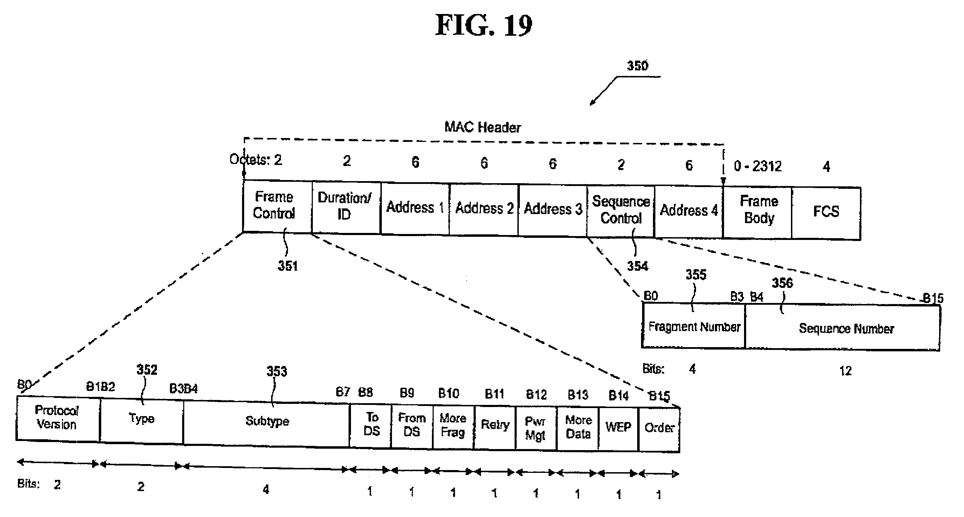

FIG. 19 illustrates a construction of a data frame 350 for use with an exemplary embodiment of the present invention. The data frame 350 comprises a MAC header, a frame body field and an FCS field. The MAC header consists of a frame control field, a duration/ID field, four address fields (address 1, address 2, address 3 and address 4) and a sequence control field, as in the conventional IEEE 802.11a. The FCS field is to check any error in 32 bit cyclic redundancy checking (CRC), which is not an essential element in the implementation of the present invention.

The frame control field 351 includes at least a type field 352 and a subtype field 353. It is assumed that if the originator sends an MSDU consisting of fragmented MPDUs in order to use a bitmap mechanism composed of bit pairs, which is to be later described, or a bitmap mechanism composed of ACK bits, then the last fragment number is sent to the recipient together with the MSDU. The last fragment number refers to the number of the whole fragments currently transmitted, that is, a serial number of the last fragment among the whole fragments.

The last fragment number may be transmitted in various ways, but the type field 352 and the subtype field 353 will be used by way of example in the present invention.

Type values of frames are recorded on the conventional type field. The values are '00,' '01,' and '10' which are sequentially referred to as 'management' frame type, 'data' frame type and 'control' frame type. A value '11' is reserved. In the present invention, the reserved value is used to maintain compatibility with the conventional standards. That is, when the type field 352 is '11,' this implies that the data frame is fragmented and then transmitted. When the conventional type field is '11,' since '0000' to '521' are reserved, the subtype field uses them, thereby promoting compatibility with the conventional standards. However, this is merely by way of example, and it will be clear to those skilled in the art that any other mechanism can be used in order to transmit the last fragment number.

In addition to the type field 352 and the subtype field 353, the frame control field 351 may further comprise a protocol version field, a To DS field, a From DS field, a retry field, a Pwr Mgt field, a More Data field, a WEP field and an Other field as in the conventional art.

The sequence control field 354 is divided into a fragment number field 355, on which the fragment number of the current data frame (or current fragment) is recorded, and a sequence number field 356, on which an identification number of the MSDU to which the current frame belongs (corresponding to a sequence number in the IEEE 802.11 Standard) is recorded. For example, when data fragmented with three fragments are transmitted, [sequence number: fragment munber] thereof may be indicated as [1:0], [1:1] and [1:2].

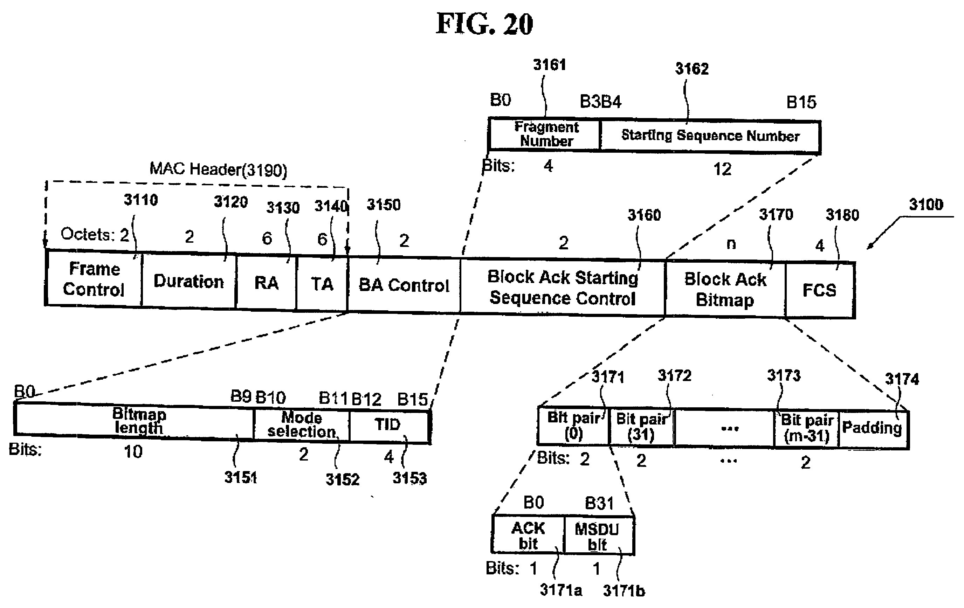

FIG. 20 illustrates a construction of a burst ACK frame 3100 for use with an exemplary embodiment of the present invention. Since the burst ACK request frame 310 may be used similarly to the conventional type, it will not be separately defined in the present invention.

The burst ACK frame 3100 comprises a MAC header section 3190 and payload sections including fields 3150, 3160, and 3170, and may further comprise a FCS field 3180 described above in FIG. 19. The MAC header section comprises a frame control field 3110, a duration field 3120, an RA field 3130, and a TA field 3140, and the payload section comprises a BA control field 3150, a block ACK starting sequence control field 3160 and a block ACK bitmap field 3170.

The frame control field 3100 has the same form as that in FIG. 19. In case of the burst ACK frame 3100, a value which indicates a control frame is recorded on the type field 352, and a subtype value of an ACK frame is recorded on the subtype field 353. Any one of the values reserved is designated and used as a subtype value.

A value equal to or larger than an addition of transmission time of the burst ACK frame 3100 and an SIFS interval is recorded on the duration field 3120. An address of a station requesting a block ACK and receiving the block ACK is recorded on the RA field 3130, and an address of a station transmitting the block ACK is recorded on the TA field 3140.

The BA control field 3150 comprises a mode selection field 3152 on which bit values (hereinafter referred to as "mode bits") to distinguish a normal mode, a compression mode, and a 1 bit mode among bit pair bitmap modes, are recorded, and a TID field 3153 on which a traffic identifier (TID) is recorded. The normal mode and the compression mode use bit pairs whereas the 1 bit mode uses one bit for transmission acknowledgement to one fragment. An example of each mode will be described later.

The BA control field 3150 may further comprise a bitmap length field 3151 on which the number m of bit pairs included in the block ACK bitmap field 3170.

The block ACK starting sequence control field 3160 comprises a starting sequence number field 3162 on which an identification number of the MSDU to which a frame to start transmission acknowledgement by a set of bit pairs, that is, a starting sequence number, is recorded, and a fragment number field 3161 on which a fragment number of the frame to start transmission acknowledgement is recorded.

On the block ACK bitmap field 3170 is recorded at least one of the bit pairs 3171, ... (hereinafter referred to as "a set of bit pairs"). A bit pair is a new format proposed by an aspect of the present invention to more efficiently record a result of transmission acknowledgement, thereby improving the conventional recording method of the block ACK bitmap field. Generally, since the total bit pairs in size would not be the unit of octets, a padding field 3174 may be added, subsequently to the bit pair. The padding field 3174 is recorded with a dummy bit having the least number of a bit (e.g., 0) so that addition of bit pairs recorded on the block ACK bitmap field 3170 in size is in the unit of octet. Where the aggregate of the bit pairs is 26 bits in size, if the size of the padding field 3174 is given 6 bits, this can meet the total size of 32 bits (that is, 4 bytes). However, since the padding field 3140 is not an indispensable element in defining the protocol, it may be omitted.
The bit pairs 3171, 3172, 3173, ... each consists of an ACK bit 3171a and an MSDU bit 3171 b. A bit to acknowledge regular transmission of a concerned frame is recorded on the ACK bit 3171a; '1' in a case of regular reception or '0' in any other cases.

A bit to indicate the "range" of data frame indicated by the 1 bit is recorded on the MSDU bit 3171b. According to an exemplary embodiment of the present invention, it may be comprehended that the "range" is to distinguish whether the ACK bit is for transmission acknowledgement to a single fragment (a single MSDU where it is not fragmented) from whether it is for transmission acknowledgement to all the fragments following the current fragment, belonging to the single MSDU, in terms of the MSDU bit 3171. The MSDU bit 3171b may be recorded as '0' in the former case and '1' in the latter case.

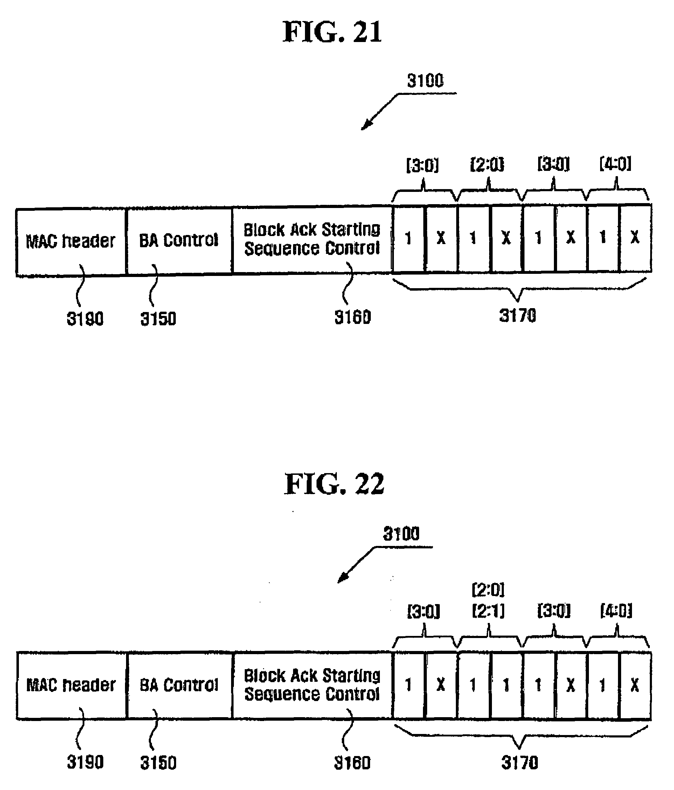

FIGS. 21 to 26 illustrate how the burst ACK frame 3100 is constructed. Two modes are used to construct a bitmap by use of bit pairs: normal mode and compression mode. Here, [A:B] is an indication to distinguish frames, wherein A refers to a sequence assigned to an MSDU number transmitted by the transmitting device, that is, a sequence number, and B refers to a sequence of a fragment, that is, a fragment number starting from 0.

FIG. 21 depicts a structure of a burst ACK frame 3100 where [1:0], [2:0], [3:0] and [4:0] are all properly received and not fragmented. In this case, both cases of the general mode and the compression mode appear identical. A starting sequence number (=1) and a fragment number (=0) of the frame [1:0] are recorded on the block ACK starting sequence control field 3160. Bit pairs consisting of an ACK bit and an MSDU bit to a target frame are sequentially recorded on the block ACK bitmap field 3170. In this case, since the bit pair is in the unit of byte, a separate padding field not needed.

Since [1:0], [2:0], [3:0] and [4:0] are all properly received, the first bits of the bit pairs are filled with '1'. It does not matter whether the second bits (indicated with 'X') thereof are filled with '0' or '1'. Since the MSDU is completed in the concerned frame, the second bits may be indicated with '1'. Or, they may be indicated with '0' since they also represent an ACK to a single frame. However, it would be more desirable to fill it with '1' in order to clarify that it is completed in a single MSDU. Hereinafter, 'X' will be interpreted in the same meaning as in this example.

FIG. 22 depicts a structure of the burst ACK frame 3100 in the compression mode where [1:0], [2:0], [2:1], [3:0] and [4:0] are all properly received. Referring to this figure, the second MSDU (sequence number=2) is fragmented, As in FIG. 21, the starting sequence number (=1) and the fragment number (=0) of the frame [1:0] are recorded on the block ACK starting sequence control field 3160. Bit pairs consisting of the ACK bit 3171a and the MSDU bit 3171b to the target frame are sequentially recorded on the block ACK bitmap field 3170.

Since [1:0], [2:0], [3:0] and [4:0] are all properly received, the first bits of the bit pairs are filled with '1'. Since [1:0], [3:0] and [4:0] are completed frames, the second bits (MSDU bits) are filled with 'X', However, since there exists [2:1] having the same sequence number and a different fragment number following [2:0], the second bit of the bit pair to [2:0] is indicated with '1', thereby indicating that all the fragments following [2:0] are all properly received.

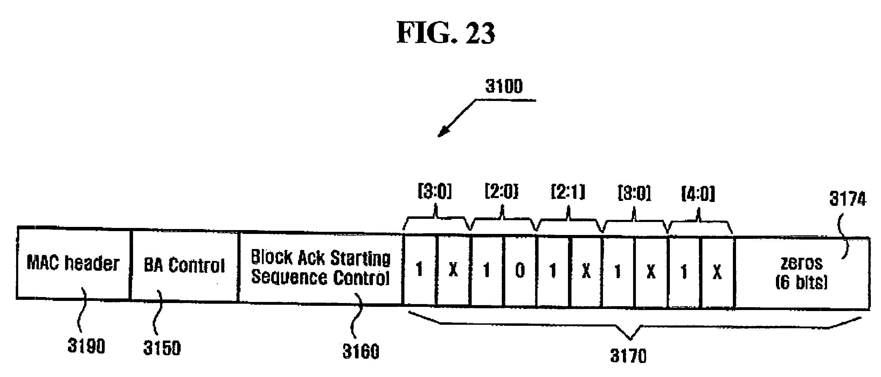

Likewise, it may be desirable to represent the MSDUs which are fragmented together. However, a method depicted in FIG. 23 that the burst ACK frame 3100 is represented fragment by fragment under the same condition where the MSDU is fragmented may be considered. A method to represent all the frames to a single MSDU together, as in FIG. 22, is defined as "compression mode," and a method to represent respective frames fragment by fragment, as in FIG. 23, is defined as "normal mode."

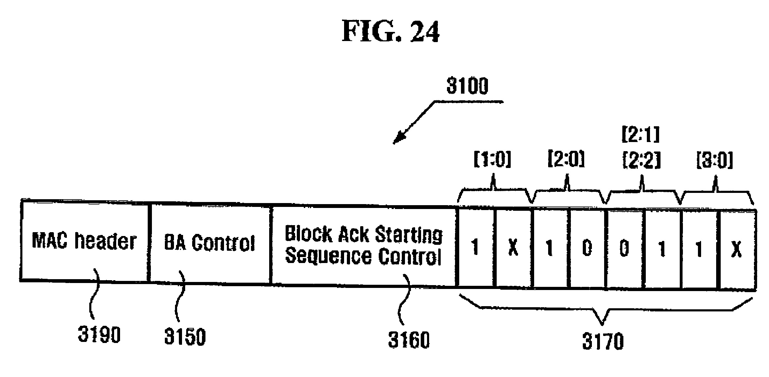

FIG. 24 depicts a structure of the burst ACK frame 3100 where an originator transmits [1:0], [2:0], [2:1], [2:2] and [3:0] but a recipient properly receives only [1:0], [2:0] and [3:0]. Referring to this figure, the second MSDU is fragmented into three fragments. The starting sequence number (=1) and the fragment number (=0) of the frame [1:0] are recorded on the block ACK starting sequence control field 3160. Since both [1:0] and [3:0] are properly received, the first bits of the bit pairs are filled with '1' and the second bits are filled with 'X' since they are completed frames. Since [2:0] is properly received but fragments following it are present, '10' is recorded on the corresponding position only to acknowledge transmission to the concerned frame, that is, the current frame. However, since [2:1] and [2:2] are not properly received, the first bits of the concerned bit pairs are recorded as '0' on the point of [2:1] representing the two frames. The second bits are indicated with '0', implying that the first bits are ACK bits to [2:1] and [2:2] following the current frame. Because the number of the whole fragments is recorded on the last frame number field 353 of the data frame, subject to the transmission acknowledgement, the recipient can determine that the remaining fragment is not received although the recipient receives only a part of plural fragments because the number of the whole fragments is recorded on the last frame number field 353 of the data frame 350 subject to transmission acknowledgement.

The example of FIG. 21 illustrates a representation in normal mode and compression mode, that of FIG. 23 illustrates that in normal mode, and the examples of FIG. 22 and 24 illustrate representations in compression mode. Where representations by both modes are available, it is deemed that a compression mode is more efficient than a normal mode. However, all the cases are not available for representation by both normal mode and compression mode. There may be some cases which can be represented only in a normal mode, or otherwise only in a compression mode.

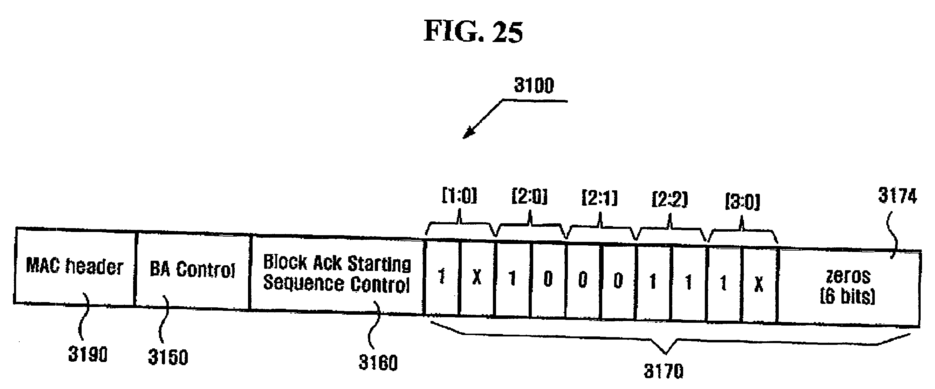

As depicted in FIG. 25, where a part is omitted from the middle of the continuous fragments, it can only be represented in normal mode but cannot be represented in compression mode. When the originator sends all of [1:0], [2:0], [2:1], [2:2] and [3:0] but the recipient does not receive [2:1] alone, the burst ACK frame 3100 can be represented in normal mode as in FIG. 25.

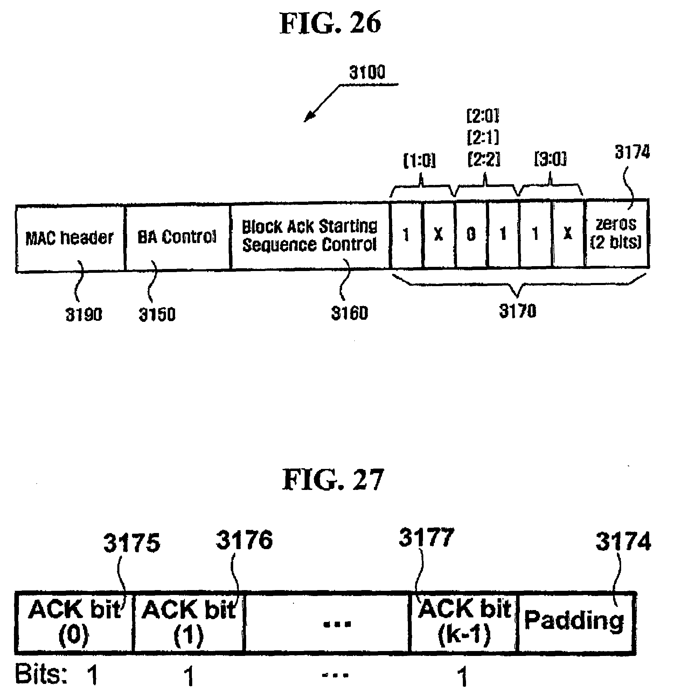

An example of FIG. 26 represents the burst ACK frame 3100 in a compression mode where the originator sends all of [1:0], [2:0], [2:1], [2:2] and [3:0] but the recipient only properly receives [1:0] and [3:0]. This case is only available for representation by the compression mode. Since the recipient receives no frame whose MSDU is 2, the recipient cannot determine that the whole number of the fragments is 3.

Since [1:0] and [3:0] are both properly received, the first bits of the bit pairs are filled with '1', and the second bits are filled with 'X' since they are completed frames. However, considering the frames whose MSDUs are 1 and 3 are received, it may be inferred that a frame whose MSDU is 2 is transmitted but not properly received. Although no frames to the second MSDU are received, the first bit is filled with '0' on the point of [2:0] and the second bit is filled with '1', thereby indicating that [2:0] and the fragments following it are not received.

As described above, some cases can be represented only in either of a normal mode or a compression mode, or some cases can be represented in both modes. If representations by both modes are available, it would be desirable to use the more efficient compression mode.

In case where representation is available in the normal mode, the transmission acknowledgement can be made in a more improved mode. Normal mode and compression mode are both examples of representing the frames by use of bit pairs. However, in case of the normal mode, transmission acknowledgement is individually conducted for each fragment and all of the MSDU bit 3171b may be represented with '0'.

Where representation is available with a normal mode, transmission acknowledgement may be made only by use of the ACK bit 3171a. This mode represented with 1 bit is defined as "1 bit mode."

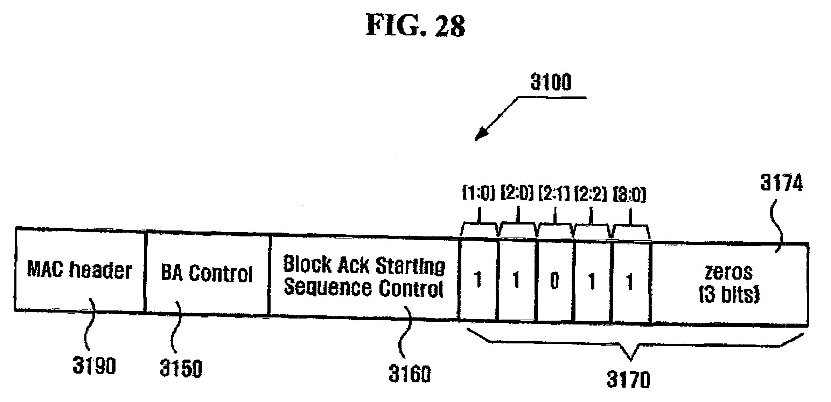

FIG. 27 illustrates a construction of a block ACK bitmap field 3170 using the 1 bit mode. In this case, the field 3170 consists solely of ACK bits 3175, 176, 177 of 1 bit, instead of bit pairs. Also, a padding field 3174 may be used to make octet. As in FIG. 25, if a case represented in the normal mode is represented in the 1 bit mode, it is like that in FIG. 28. This result is identical when omitting a MSDU bit 3171b from the bit pair in the normal mode.

This is similar to the conventional art, in light of the fact that the conventional block ACK bitmap field (23 of FIG. 17) also consists of sets of bits for transmission acknowledgement. However, unlike the conventional art, the 1 bit mode of the present invention uses a block ACK bitmap field 3170 whose size is variable. The conventional block ACK bitmap field (23 of FIG. 17) uniformly allocates 16 bits for transmission acknowledgement to a single frame which is not fragmented or the frames (fragments) which are fragmented less or than 16 fragments, but the 1 bit mode allocates one bit to one frame or the fragments, thereby being clearly effective in bit reduction. Accordingly, when the ACK bits 3175, ... are recorded on the block ACK bitmap field 3170 according to the 1 bit mode, they are continuously recorded, unlike the conventional art. In the present invention, since the originator informs the recipient of the number of fragments (the last fragment number) through data frames, the fragment information is clearly shared between the originator and the recipient, thereby posing no danger of causing confusion although they are continuously recorded.

The mode which is used to construct a bitmap may be recorded on a mode selection field 3152 of FIG. 20. For example, '00' refers to a normal mode, '01' to a compression mode, and '10' to a 1 bit mode.

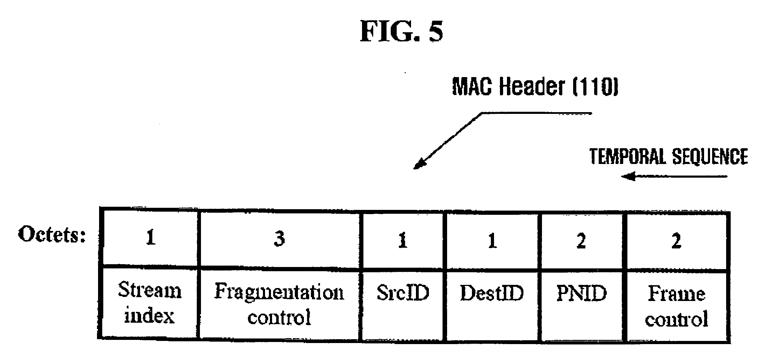

The bit pairs (in case of a compression mode and normal mode) or the number of bits (ACT bit in case of a 1 bit mode) included in the block ACK bitmap field 3170 may be recorded on the bitmap length field 3151. For example, 4 is recorded on the bitmap length field 3151 in a case of FIG. 22, and 5 is recorded on the bitmap length field 3151 in a case of FIG. 23. However, when bit pairs 3171, ... or ACK bits 3175, ... are recorded by the recipient according to rules of each mode, the sizes thereof may be arbitrarily determined. Transmission of plural data frames can sufficiently be acknowledged only by sequentially recording the bit pairs or ACK bits and sending them to the originator. Thus, the bitmap length field 3151 is not an indispensable element in implementing the present invention, and the bitmap length field 3151 may be replaced with a reserved field.

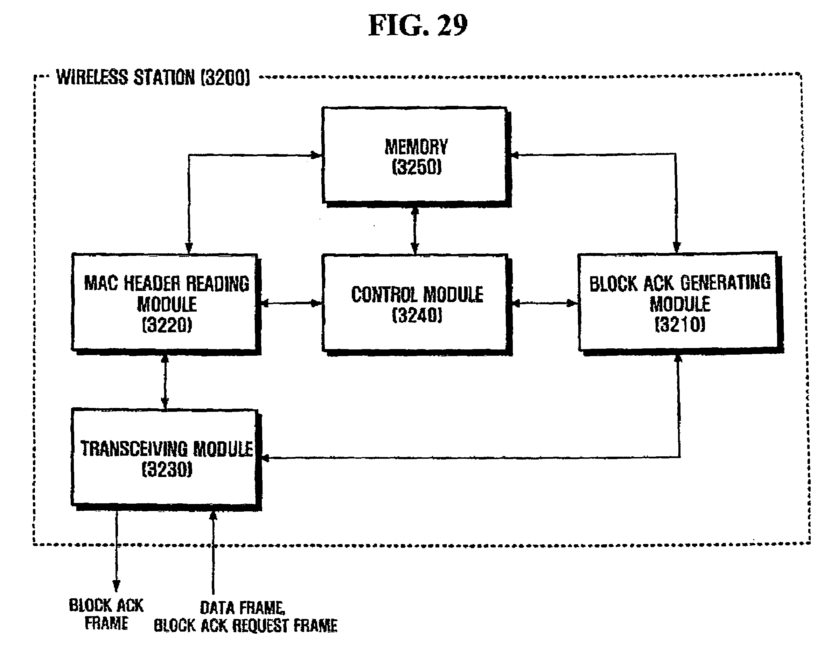

FIG. 29 is a block diagram illustrating a construction of a wireless station 3200 according to an exemplary embodiment of the present invention, which transmits a burst ACK frame 3100 described above. The wireless station 3200 comprises a burst ACK generating module 3210, a MAC header reading module 3220, a transcieving module 3230, a control module 3240 and a memory 3250.
The MAC header reading module 3220 reads out a sequence number of the MSDU to which a concerned frame belongs, a fragment number of the concerned frame, and a fragment number of the MSDU to which the concerned frame belongs, from the MAC header of the received data frame. The sequence number of the MSDU can be known from the sequence number field 356 of the MAC header, and the fragment number from the fragment number field 355 of the MAC header. The fragment number (or the last fragment number) of the MSDU can be known from the subtype field 353 of the MAC header. Where an MSDU is fragmented and transmitted, the type fields 352 of data frames composed of each fragment are field with '11.' This is because the last fragment number is recorded on the subtype field 353.

In this manner, information read out from the MAC header is stored in the memory 3250.

The burst ACK generating module 3210 generates a payload of the burst ACK frame 3100 according to the present invention, by use of information read out from the MAC header stored in the memory 3250. The payload comprises a BA control field 3150, a block ACK starting sequence control field 3160, and a block ACK bitmap field 3170.

The BA control field 3150 comprises a mode selection field 3152 on which bit values to distinguish a normal mode, a compression mode, and a 1 bit mode, each mode to construct a bitmap, and a TID field 3153 on which a traffic identifier is recorded. The BA control field 3150 may further comprise a bitmap length field 3151, on which the number of bit pairs which are included in the block ACK bitmap field 3170 or the number k of the ACK bits is recorded, in case of the 1 bit mode.

The block ACK starting sequence control field 3160 comprises a starting sequence number field 3162 on which an identification number of the MSDU to which a frame to start transmission acknowledgement by the bitmap, that is, a sequence number, is recorded and a fragment number field 3161, on which a fragment number of the frame to start transmission acknowledgement is recorded.

The block ACK bitmap field 3170 consists of at least one of the bit pairs 3171, ..., or at least one of ACK bits 3175, .... Subsequent to the bit pairs or ACK bits, it may further comprise a padding field 3174 to make the whole block ACK bitmap field 3170 meet the unit of octet.

In cases of normal mode and compression mode, bit pairs 3171, ... constituting the bitmap field 3170 consists of an ACK bit 3171 a and an MSDU bit 3171b. A bit to acknowledge whether a concerned frame is properly transmitted is recorded on the ACK bit 3171 a. Bit information to distinguish whether the ACK bit is to acknowledge transmission of a single fragment (or a MSDU) from whether it is to acknowledge transmission or all the fragments following the current fragment, belonging to a single MSDU.

In case of the 1 bit mode, a bit to acknowledge whether the concerned frame is properly transmitted is recorded on the ACK bits 3175, ... constituting the bitmap field 3170.

The burst ACK generating module 3210 comprises a BA control field 3150, a block ACK starting sequence control field 3160 and a block ACK bitmap field 3170. Once having generated the payload of the burst ACK frame 3100, the burst ACK generating module 3210 generates a MAC header 3190 necessary for transmitting the payload and adds it to the burst ACK frame 3100 to thereby generate the burst ACK frame 3100.

The control module 3240 controls operations of other modules within the wireless station 3100, which may be realized as a central processing unit (CPU), or a microcomputer.

The transceiving module 3230 receives data frames and a burst ACK request frame 310 from another wireless station, that is, the originator, and transmits the burst ACK frame 3100 generated by the burst ACK generating module 3210 to the originator. The transceiving module 3230 demodulates received wireless signals and restores binary data, and modulates the binary data to be transmitted and transmits the modulated binary data to the air.

The term 'module', as used herein, means, but is not limited to, a software or hardware component, such as a Field Programmable Gate Array (FPGA) or Application Specific Integrated Circuit (ASIC), which performs certain tasks. A module may advantageously be configured to reside on the addressable storage medium and configured to execute on one or more processors. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules. In addition, components and modules may be embodied in order to implement one or more computers within a communication system.

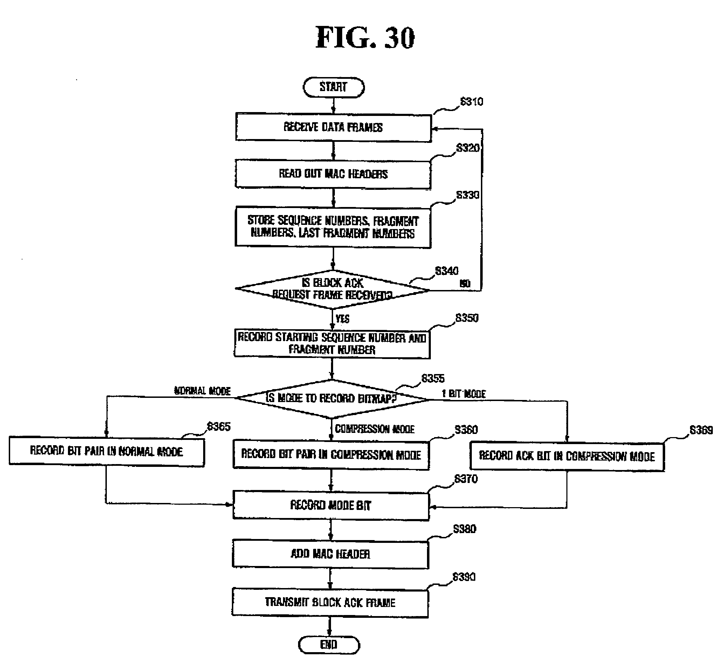

FIG. 30 is a flow chart illustrating a method according to an exemplary embodiment of the present invention.

A wireless station 3200 receives a data frame from another wireless station in operation S310, and reads out the MAC header of the data frame in operation S320. In reading out the MAC header, wireless station 3200 reads out a sequence number of the MSDU to which the data frame belongs, and a fragment number of a concerned frame. When the data frame includes any part of fragments in the fragmented MSDU, the wireless station 3200 also reads out the fragment number of the MSDU. By checking whether the type field 352 is '11,' it may be determined whether the data frame is fragmented. At this time, the number of fragments may also be determined by reading out the subtype field 353. The wireless station 3200 stores a sequence number, a fragment number and a last fragment number (if present) in the memory 3250 in operation S330.

Operations S310 to S330 are repeated until the wireless station 3200 receives the burst ACK request frame 310 from the originator. After the wireless station 3200 receives the burst ACK request frame ("YES" of S340), operations S350 to S390 to generate and transmit the burst ACK frame are implemented.

The wireless station 3200 records the sequence number of the MSDU to which a frame to start transmission acknowledgement to the block ACK starting sequence control field 3160 and the fragment number of the frame to start transmission acknowledgement S350.

Where bit pairs recorded on the bitmap are represented in the compression mode, the bit pairs are recorded on the block ACK bitmap field 3170 according to the compression mode in operation S360. Where they are represented in the normal mode, the bit pairs are recorded on the block ACK bitmap field 3170 according to the normal mode in operation S365, To represent them in the 1 bit mode, ACK bits 3175, ... are recorded on the block ACK bitmap field 3170 according to the 1 bit mode in operation S369. As an example of selecting any mode, where compression mode and 1 bit mode can be used, any of the modes, having a smaller size of the bitmap to each mode, may be selected. Where the normal mode may be used, representation by the 1 bit mode is always available, and thus, it is desirable to use the more efficient 1 bit mode.

Mode bits corresponding to each mode are recorded on the BA control field 3150 in operation S370.

The wireless station 3200 generates the burst ACK frame 3100 by adding a MAC header 3190 to a payload consisting of the BA control field 3150, the block ACK starting sequence control field 3160, and the block ACK bitmap field 3170 in operation S380, and then transmits the generated burst ACK frame 3100 to the other wireless station.

According to the present invention, overhead resulting from transmitting burst ACK frames may be reduced.

The present invention may also be effective in improving the rate of data transmission in the whole wireless network, owing to the reduction in overhead of the ACK frames.
Those of ordinary skill in the art can understand that various replacements, modifications and changes in form and details may be made therein without departing from the spirit and scope of the present invention as defined by the following claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An ACK frame transmission method whereby data frames are received from a transmitting device and receipt of the data frames is acknowledged with a single ACK frame, the method comprising:
(a) receiving data frames from the transmitting device and storing first identification information of the data frames which are received;
(b) generating a first field by recording a set of bit pairs to each of the data frames which are received by using the first identification information which is stored;
(c) generating an ACK frame which includes the first field which is generated; and
(d) transmitting the ACK frame which is generated to the transmitting device,
wherein each bit pair includes:
a first bit which acknowledges whether any concerned data frame is properly received; and
a second bit which distinguishes whether the first bit acknowledges receipt of the concerned data frame from whether the first bit acknowledges receipt of all the fragments which follow the concerned data frame.

2. The method of claim 1, wherein (c) comprises generating, from the first identification information, a second field on which second identification information is recorded.

3. The method of claim 1 or 2, wherein (c) further comprises converting the first field to a byte unit by adding predetermined dummy bits if a number of bits in the first field is less than a byte.

4. The method of claim 1, 2 or 3, wherein the first identification information includes MSDU (MAC service data unit) numbers and fragment numbers of the data frames which are received.

5. The method of claim 3, or of claim 4 as dependent on claim 2, wherein the second identification information refers to the first identification information which includes an earliest fragment number from the first identification information which includes an earliest MSDU number.

6. The method of any preceding claim, wherein the first bit is recorded as '1' if the concerned data frame is properly received and the first bit is recorded as '0' if the concerned data frame is not properly received, and the second bit is recorded as `1' if the first bit indicates acknowledgement on receipt of the concerned data frame alone and the second bit is recorded as '0' if the first bit does not indicate acknowledgement on receipt of the concerned data frame alone, and
wherein (b) includes:
recording the bit pair as '01' if no MSDU (MAC service data unit) number which corresponds to a specific MSDU sequence is present, and determining whether the MSDU number which corresponds to the specific MSDU sequence is fragmented if the MSDU number which corresponds to the specific MSDU sequence is present; and
recording the bit pair as '1X' if the MSDU is not fragmented,
wherein 'X' refers to either one of 1 and 0.

7. The method of claim 6, wherein, if the MSDU is fragmented, (b) includes:
recording bit pairs sequentially to each of the sequences which are fragmented that are less than a maximum fragment number; and recording the bit pairs as '1X' if the maximum fragment number is equal to a last fragment number, wherein 'X' refers to either one of 1 and 0.

8. The method of claim 7, wherein the bit pair is recorded as '10' and a subsequent bit pair is recorded with '01' if the maximum fragment number is not equal to the last fragment number.

9. The method of any preceding claim, wherein the first field is generated by recording the set of bit pairs to each of the data frames which are received if transmission of an ACK frame is requested from the transmitting device.

10. An ACK frame transmission method whereby one or more data frames are received from a transmitting station and receipt of the data frames is acknowledged with a single ACK frame, the method comprising:
(a) receiving the data frames from the transmitting station and storing information which includes at least identification numbers of the data frames which are received, wherein the information which is stored further includes fragment numbers and last fragment numbers of the data frames which are received are stored if the data frames are fragmented;
(b) recording a set of bit pairs to each of the data frames which are received by using the information which is stored, wherein each bit pair includes a first bit which acknowledges whether a concerned data frame is properly transmitted, and a second bit which represents a range of the concerned data frame which is indicated by the first bit;
(c) generating an ACK frame which includes the set of the bit pairs which are recorded; and
(d) transmitting the ACK frame which is generated to the transmitting station.

11. The method of claim 10, wherein the set of bit pairs is variable in size.

12. The method of claim 10 or 11, wherein the range of the data frame is any one of a range which indicates a single fragment and a range which indicates all fragments which follow a current fragment which belong to a single MSDU (MAC service data unit).

13. The method of claim 10, 11 or 12, wherein (c) comprises recording an identification number of a data frame to start transmission acknowledgement with the bit pair set, and a fragment number of the data frame to start transmission acknowledgement.

14. The method of claim 13, wherein (c) further comprises converting the bit pair set to a byte unit by adding a predetermined dummy bit if a number of bits in the bit pair sat is less than a byte.

15. The method of claim 10, 11, 12, 13 or 14, wherein the identification number is a sequence number of an MSDU (MAC service data unit) to which the data frame which is received belongs.

16. The method of any one of claims 10 - 15, wherein the last fragment number is recorded on a subtype field of the data frame which is received.

17. The method of any one of claims 10 - 16, wherein the first bit is recorded as '1' if the concerned frame is properly received and the first bit is record as '0' if the concerned frame is not properly received.

18. The method of any one of claims 10 - 17, wherein the second bit is recorded as '1' if the first bit indicates the transmission acknowledgement to the concerned data frame alone, and the second bit is recorded as '0' if the first bit does not indicate the transmission acknowledgement to the concerned data frame alone.

19. The method of any one of claims 10 - 18, wherein the set of bit pairs is recorded to each of the data frames which are received by using the information which is stored if an ACK frame transmission is requested from the transmitting station.

20. An ACK frame transmission method whereby one or more data frames are received from a transmitting device, and receipt of the data frames is acknowledged with a single ACK frame, the method comprising:
(a) receiving the data frames from the transmitting station and storing at least information which includes identification numbers of the data frames which are received, wherein the information which is stored further includes fragment number and last fragment numbers of the data frames if the data frames are fragmented;
(b) continuously recording bits with the information which is stored to acknowledge whether each of the data frames which are received is properly transmitted;
(c) generating an ACK frame which includes a bit pair set which is recorded; and
(d) transmitting the ACK frame which is generated to the transmitting station.

21. The method of claim 20, wherein sets of bits which are recorded for each of the data frames which are received are variable in size.

22. The method of claim 20 or 21, wherein (c) comprises recording an identification number of a frame which starts transmission acknowledgement with the bit pair set, and recording a fragment number of the frame which starts transmission acknowledgement.

23. The method of claim 20, 21 or 22, wherein the identification numbers are sequence numbers of the data frames which are received.

24. The method of claim 20, 21, 22 or 23, wherein a bit is recorded as '1' if the concerned data frame is properly received, and the bit is recorded as '0' if the concerned data frame is not properly received.

25. The method of claim 24, 21, 22, 23 or 24, wherein the bits are continuously recorded by using the information which is stored to acknowledge whether each of the data frames which are received is properly transmitted if an ACK frame transmission is requested from the transmitting station.

26. An ACK frame transmission apparatus whereby data frames are received from a transmitting device and receipt of the data frames is acknowledged with a single ACK frame, the apparatus comprising:
a first means (3230) for receiving data frames from the transmitting device;
a second means (3250) for storing first identification information of the data frames which are received;
a third means (3210) for generating a first field by recording a set of bit pairs to each of the data frames which are received by using the identification information which is stored, and for generating an ACK frame which includes the first field which is generated; and
a fourth means (3230) for transmitting the ACK frame which is generated to the transmitting device,
wherein each bit pair includes:
a first bit which acknowledges whether any concerned frame is properly received; and
a second bit which distinguishes whether the first bit acknowledges receipt of the concerned data frame alone from whether the first bit acknowledges receipt of all fragments which follow the concerned data frame.

27. The apparatus of claim 26, wherein the third means generates a second field on which second identification information is recorded from the first identification information.

28. The apparatus of claim 27 or 28, wherein the third means converts the first field to a byte unit by adding a predetermined dummy bit if a number of bits in the first field is less than a byte.

29. The apparatus of claim 26, 27 or 28, wherein the first identification information includes an MSDU (MAC service data unit) number and a fragment number of the data frame which is received.

30. The apparatus of 27, or of either one of claim 28 or claim 29 as dependent on claim 27, wherein the second identification information includes an earliest fragment number which corresponds to an earliest MSDU number.

31. The apparatus of any one of claims 26 - 30, wherein the third means (3210) generates the first field and the ACK frame upon receiving a request for an ACK frame transmission from the transmitting device.

32. An ACK frame transmission apparatus whereby data frames are received from a transmitting station and receipt of the data frames is acknowledged with a single ACK frame, the apparatus comprising:
a means (3230, 3250) for receiving the data frames from the transmitting station and storing information which includes at least identification numbers of the data frames which are received, wherein the information which is stored further includes fragment numbers and last fragment numbers of the data frames if the data frames are fragmented;
a means (3210) for recording a set of bit pairs to each of the data frames which are received by using the information which is stored, wherein each bit pair includes a first bit which acknowledges whether a concerned data frame is properly transmitted, and a second bit which represents a data frame range which is indicated by the first bit;
a means (3210) for generating an ACK frame which includes a set of the bit pairs which are recorded; and
a means (3230) for transmitting the ACK frame which is generated to the transmitting station.

33. An ACK frame transmission apparatus whereby one or more data frames are received from a transmitting station and receipt of the data frames is acknowledged with a single ACK frame, the apparatus comprising:
a means (3230, 3210) for receiving the data frames from the transmitting station and storing information which includes at least identification numbers of the data frames which are received, wherein the information which is stored further includes fragment numbers and last fragment numbers of the data frames if the data frames are fragmented;
a means (3250) for continuously recording bits to acknowledge proper receipt of each of the data frames which are received by using the information which is stored;
a means (3210) for generating an ACK frame which includes the bits which are recorded; and
a means (3230) for transmitting the ACK frame which is generated to the transmitting station.
